# EUROPEAN PATENT APPLICATION

(11) **EP 4 661 360 A1**
(43) Date of publication of application: **10.12.2025**
(21) Application number: 25174085.8
(22) Date of filing: 02.05.2025
(51) Int. Cl.: H04L 43/028, H04L 45/7453

(54) **PACKET REPLICATION AND DEDUPLICATION OVER MULTIPLE ACCESS TECHNOLOGIES**

(30) Priority: 03.06.2024 FI 20245707
(71) Applicant: Nokia Solutions and Networks Oy, 02610 Espoo (FI)
(72) Inventor: BHATIA, Randeep, Green Brook - NJ (US); CHANG, Hyunseok, Holmdel - NJ (US)
(74) Representative: Nokia EPO representatives

(57) **Abstract**

Various example embodiments for supporting packet replication and deduplication are presented. Various example embodiments may be configured to support packet replication and deduplication within the context of application flows utilizing multiple communication paths which may be based on multiple access technologies. Various example embodiments may be configured to support packet replication and deduplication based on support for application-based policy control for enabling applications to control selection and application of packet replication and deduplication to application traffic flows based on considerations such as the needs of the application traffic flows, network conditions, and so forth. Various example embodiments may be configured to support packet replication and deduplication based on packet hashes, packet sequence numbers, or the like, as well as various combinations thereof.

## Description

### TECHNICAL FIELD

Various example embodiments relate generally to communication systems and, more particularly but not exclusively, to supporting packet replication and deduplication for improved communication performance in various contexts.

### BACKGROUND

Various communications technologies may be used to support communications in various types of communication systems.

### SUMMARY

In at least some example embodiments, an apparatus includes at least one processor and at least one memory including instructions which, when executed by the at least one processor, cause the apparatus at least to maintain a set of data structures including at least a first data structure, a second data structure, and a third data structure, and determine, for a received packet based on the set of data structures, whether to accept the received packet or drop the received packet as being a duplicate. The first data structure is configured to store a plurality of entries including a respective plurality of key-value pairs for a respective plurality of packet hashes, wherein, for each of the plurality of key-value pairs, the respective key-value pair includes the respective packet hash as a key and a value including, for each of up to k packets matching the respective packet hash, respective packet information for the respective packet that includes a timestamp of the respective packet, a packet size of the respective packet, and a pointer to an entry of the second data structure storing additional packet information for the respective packet. The second data structure is configured to store, for each of a plurality of packets for which respective packet information has been stored in the first data structure, the respective additional packet information for the respective packet that includes a portion of the respective packet, the packet hash of the respective packet, and an indication as to whether the packet information for the respective packet is still stored in the first data structure. The third data structure is configured to store, for each of the plurality of packet hashes of the first data structure, respective access count information including, for each of the up to k packets matching the respective packet hash, a respective set of access counts including, for each of a plurality of network access interfaces available for receipt of the respective packet, a respective access count value indicative of a number of times the respective packet has been received over the respective network access interface. In at least some example embodiments, the instructions, when executed by the at least one processor, cause the apparatus at least to receive, via one of the network access interfaces, the received packet, compute, based on the received packet, a packet hash of the received packet, and accept the received packet based on a determination that the packet hash of the received packet does not match any of the plurality of packet hashes of the first data structure. In at least some example embodiments, the instructions, when executed by the at least one processor, cause the apparatus at least to create, for the received packet in the first data structure, a new entry including a key storing the packet hash of the received packet and a value, wherein the value includes a count field having a value set to one, wherein the value includes a slot for the received packet, wherein the slot for the received packet stores packet information for the received packet, wherein the packet information for the received packet includes a timestamp of the received packet, a packet size of the received packet, and a pointer to a new entry for the received packet in the second data structure. In at least some example embodiments, the new entry created for the received packet in the first data structure is created based on reuse of a least recently used entry of the first data structure. In at least some example embodiments, the instructions, when executed by the at least one processor, cause the apparatus at least to create, for the received packet in the second data structure, the new entry for the received packet, wherein the new entry for the received packet includes additional packet information for the received packet, wherein the additional packet information for the received packet includes packet data of the received packet. In at least some example embodiments, the second data structure comprises a circular buffer supporting a pointer, wherein the new entry created for the received packet in the second data structure is created based on reuse of an existing entry of the second data structure currently pointed to by the pointer. In at least some example embodiments, the instructions, when executed by the at least one processor, cause the apparatus at least to create, for the received packet in the third data structure, a new entry including access count information indicating, for each of the plurality of network access interfaces, respective numbers of times the received packet has been received over the respective network access interface, wherein the access count information includes a value set equal to one for the one of the network access interfaces via which the received packet was received and any remaining values for any other network access interfaces in the plurality of network access interfaces are set to zero. In at least some example embodiments, the instructions, when executed by the at least one processor, cause the apparatus at least to receive, via one of the network access interfaces, the received packet, compute, based on the received packet, a packet hash of the received packet, and accept the received packet based on a determination, based on the first data structure, that the packet hash of the received packet matches one of packet hashes of the first data structure and a determination, based on the first data structure and the second data structure, that the received packet does not match any packet having packet information stored in the respective value associated with the respective key having a packet hash matching the packet hash of the received packet. In at least some example embodiments, the instructions, when executed by the at least one processor, cause the apparatus at least to receive, via one of the network access interfaces, the received packet, compute, based on the received packet, a packet hash of the received packet, and accept the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is a retransmission. In at least some example embodiments, the instructions, when executed by the at least one processor, cause the apparatus at least to receive, via one of the network access interfaces, the received packet, compute, based on the received packet, a packet hash of the received packet, and drop the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is not a retransmission. In at least some example embodiments, to determine whether to accept the received packet or drop the received packet as being a duplicate, the instructions, when executed by the at least one processor, cause the apparatus at least to receive, via one of the network access interfaces, the received packet, compute, based on the received packet, a packet hash of the received packet, determine, based on a determination that the packet hash of the received packet matches one of packet hashes of the first data structure, whether the received packet matches any packet having packet information stored in the respective value associated with the respective key having a packet hash matching the packet hash of the received packet, and determine, based on whether the received packet matches any packet having packet information stored in the respective value associated with the respective key having the packet hash matching the packet hash of the received packet, whether to accept the received packet or drop the received packet as being a duplicate. In at least some example embodiments, to determine whether the received packet matches any packet having packet information stored in the respective value associated with the respective key having the packet hash matching the packet hash of the received packet, the instructions, when executed by the at least one processor, cause the apparatus at least to determine whether a packet size of the received packet matches any of the packet sizes of any of the up to k packets of the respective value of the key-value pair of the respective key having the packet hash matching the packet hash of the received packet, and determine, based on a determination that the packet size of the received packet does not match any of the packet sizes of any of the up to k packets of the respective value of the key-value pair of the respective key having the packet hash matching the packet hash of the received packet, that the received packet does not match any packet having packet information stored in the respective value associated with the respective key having the packet hash matching the packet hash of the received packet. In at least some example embodiments, to determine whether to accept the received packet or drop the received packet as being a duplicate, the instructions, when executed by the at least one processor, cause the apparatus at least to receive, via one of the network access interfaces, the received packet, compute, based on the received packet, a packet hash of the received packet, determine, based on the packet hash of the received packet from the respective access count information associated with the packet hash of the received packet, one of the sets of the access counts corresponding to the received packet, and determine, based on the one of the sets of access counts corresponding to the received packet, whether the received packet is a retransmission or a duplicate packet. In at least some example embodiments, to determine whether the received packet is a retransmission or a duplicate packet, the instructions, when executed by the at least one processor, cause the apparatus at least to increment, within the one of the sets of access counts corresponding to the received packet, the respective access count value associated with the of the network access interfaces over which the packet was received to provide an updated access count value for the one of the network interfaces over which the packet was received, and determine, based on a comparison of the updated access count value with other access count values in the set of access counts corresponding to the received packet, whether the received packet is a retransmission or a duplicate packet. In at least some example embodiments, the received packet is determined to be a retransmission based on a determination that the updated access count value is greater than each of the other access count values in the set of access counts corresponding to the received packet. In at least some example embodiments, the received packet is determined to be a duplicate packet based on a determination that the updated access count value is not greater than each of the other access count values in the set of access counts corresponding to the received packet. In at least some example embodiments, the first data structure, the second data structure, and the third data structure are each bounded in size. In at least some example embodiments, the first data structure comprises a hash table, the second data structure comprises a buffer map, and the third data structure comprises a retransmission map.

In at least some example embodiments, a non-transitory computer-readable medium stores computer program instructions which, when executed by an apparatus, cause the apparatus at least to maintain a set of data structures including at least a first data structure, a second data structure, and a third data structure, and determine, for a received packet based on the set of data structures, whether to accept the received packet or drop the received packet as being a duplicate. The first data structure is configured to store a plurality of entries including a respective plurality of key-value pairs for a respective plurality of packet hashes, wherein, for each of the plurality of key-value pairs, the respective key-value pair includes the respective packet hash as a key and a value including, for each of up to k packets matching the respective packet hash, respective packet information for the respective packet that includes a timestamp of the respective packet, a packet size of the respective packet, and a pointer to an entry of the second data structure storing additional packet information for the respective packet. The second data structure is configured to store, for each of a plurality of packets for which respective packet information has been stored in the first data structure, the respective additional packet information for the respective packet that includes a portion of the respective packet, the packet hash of the respective packet, and an indication as to whether the packet information for the respective packet is still stored in the first data structure. The third data structure is configured to store, for each of the plurality of packet hashes of the first data structure, respective access count information including, for each of the up to k packets matching the respective packet hash, a respective set of access counts including, for each of a plurality of network access interfaces available for receipt of the respective packet, a respective access count value indicative of a number of times the respective packet has been received over the respective network access interface. In at least some example embodiments, the computer program instructions, when executed by the apparatus, cause the apparatus at least to receive, via one of the network access interfaces, the received packet, compute, based on the received packet, a packet hash of the received packet, and accept the received packet based on a determination that the packet hash of the received packet does not match any of the plurality of packet hashes of the first data structure. In at least some example embodiments, the computer program instructions, when executed by the apparatus, cause the apparatus at least to create, for the received packet in the first data structure, a new entry including a key storing the packet hash of the received packet and a value, wherein the value includes a count field having a value set to one, wherein the value includes a slot for the received packet, wherein the slot for the received packet stores packet information for the received packet, wherein the packet information for the received packet includes a timestamp of the received packet, a packet size of the received packet, and a pointer to a new entry for the received packet in the second data structure. In at least some example embodiments, the new entry created for the received packet in the first data structure is created based on reuse of a least recently used entry of the first data structure. In at least some example embodiments, the computer program instructions, when executed by the apparatus, cause the apparatus at least to create, for the received packet in the second data structure, the new entry for the received packet, wherein the new entry for the received packet includes additional packet information for the received packet, wherein the additional packet information for the received packet includes packet data of the received packet. In at least some example embodiments, the second data structure comprises a circular buffer supporting a pointer, wherein the new entry created for the received packet in the second data structure is created based on reuse of an existing entry of the second data structure currently pointed to by the pointer. In at least some example embodiments, the computer program instructions, when executed by the apparatus, cause the apparatus at least to create, for the received packet in the third data structure, a new entry including access count information indicating, for each of the plurality of network access interfaces, respective numbers of times the received packet has been received over the respective network access interface, wherein the access count information includes a value set equal to one for the one of the network access interfaces via which the received packet was received and any remaining values for any other network access interfaces in the plurality of network access interfaces are set to zero. In at least some example embodiments, the computer program instructions, when executed by the apparatus, cause the apparatus at least to receive, via one of the network access interfaces, the received packet, compute, based on the received packet, a packet hash of the received packet, and accept the received packet based on a determination, based on the first data structure, that the packet hash of the received packet matches one of packet hashes of the first data structure and a determination, based on the first data structure and the second data structure, that the received packet does not match any packet having packet information stored in the respective value associated with the respective key having a packet hash matching the packet hash of the received packet. In at least some example embodiments, the computer program instructions, when executed by the apparatus, cause the apparatus at least to receive, via one of the network access interfaces, the received packet, compute, based on the received packet, a packet hash of the received packet, and accept the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is a retransmission. In at least some example embodiments, the computer program instructions, when executed by the apparatus, cause the apparatus at least to receive, via one of the network access interfaces, the received packet, compute, based on the received packet, a packet hash of the received packet, and drop the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is not a retransmission. In at least some example embodiments, to determine whether to accept the received packet or drop the received packet as being a duplicate, the instructions, when executed by the at least one processor, cause the apparatus at least to receive, via one of the network access interfaces, the received packet, compute, based on the received packet, a packet hash of the received packet, determine, based on a determination that the packet hash of the received packet matches one of packet hashes of the first data structure, whether the received packet matches any packet having packet information stored in the respective value associated with the respective key having a packet hash matching the packet hash of the received packet, and determine, based on whether the received packet matches any packet having packet information stored in the respective value associated with the respective key having the packet hash matching the packet hash of the received packet, whether to accept the received packet or drop the received packet as being a duplicate. In at least some example embodiments, to determine whether the received packet matches any packet having packet information stored in the respective value associated with the respective key having the packet hash matching the packet hash of the received packet, the computer program instructions, when executed by the apparatus, cause the apparatus at least to determine whether a packet size of the received packet matches any of the packet sizes of any of the up to k packets of the respective value of the key-value pair of the respective key having the packet hash matching the packet hash of the received packet, and determine, based on a determination that the packet size of the received packet does not match any of the packet sizes of any of the up to k packets of the respective value of the key-value pair of the respective key having the packet hash matching the packet hash of the received packet, that the received packet does not match any packet having packet information stored in the respective value associated with the respective key having the packet hash matching the packet hash of the received packet. In at least some example embodiments, to determine whether to accept the received packet or drop the received packet as being a duplicate, the computer program instructions, when executed by the apparatus, cause the apparatus at least to receive, via one of the network access interfaces, the received packet, compute, based on the received packet, a packet hash of the received packet, determine, based on the packet hash of the received packet from the respective access count information associated with the packet hash of the received packet, one of the sets of the access counts corresponding to the received packet, and determine, based on the one of the sets of access counts corresponding to the received packet, whether the received packet is a retransmission or a duplicate packet. In at least some example embodiments, to determine whether the received packet is a retransmission or a duplicate packet, the computer program instructions, when executed by the apparatus, cause the apparatus at least to increment, within the one of the sets of access counts corresponding to the received packet, the respective access count value associated with the of the network access interfaces over which the packet was received to provide an updated access count value for the one of the network interfaces over which the packet was received, and determine, based on a comparison of the updated access count value with other access count values in the set of access counts corresponding to the received packet, whether the received packet is a retransmission or a duplicate packet. In at least some example embodiments, the received packet is determined to be a retransmission based on a determination that the updated access count value is greater than each of the other access count values in the set of access counts corresponding to the received packet. In at least some example embodiments, the received packet is determined to be a duplicate packet based on a determination that the updated access count value is not greater than each of the other access count values in the set of access counts corresponding to the received packet. In at least some example embodiments, the first data structure, the second data structure, and the third data structure are each bounded in size. In at least some example embodiments, the first data structure comprises a hash table, the second data structure comprises a buffer map, and the third data structure comprises a retransmission map.

In at least some example embodiments, a method includes maintaining a set of data structures including at least a first data structure, a second data structure, and a third data structure, and determining, for a received packet based on the set of data structures, whether to accept the received packet or drop the received packet as being a duplicate. The first data structure is configured to store a plurality of entries including a respective plurality of key-value pairs for a respective plurality of packet hashes, wherein, for each of the plurality of key-value pairs, the respective key-value pair includes the respective packet hash as a key and a value including, for each of up to k packets matching the respective packet hash, respective packet information for the respective packet that includes a timestamp of the respective packet, a packet size of the respective packet, and a pointer to an entry of the second data structure storing additional packet information for the respective packet. The second data structure is configured to store, for each of a plurality of packets for which respective packet information has been stored in the first data structure, the respective additional packet information for the respective packet that includes a portion of the respective packet, the packet hash of the respective packet, and an indication as to whether the packet information for the respective packet is still stored in the first data structure. The third data structure is configured to store, for each of the plurality of packet hashes of the first data structure, respective access count information including, for each of the up to k packets matching the respective packet hash, a respective set of access counts including, for each of a plurality of network access interfaces available for receipt of the respective packet, a respective access count value indicative of a number of times the respective packet has been received over the respective network access interface. In at least some example embodiments, the method includes receiving, via one of the network access interfaces, the received packet, computing, based on the received packet, a packet hash of the received packet, and accepting the received packet based on a determination that the packet hash of the received packet does not match any of the plurality of packet hashes of the first data structure. In at least some example embodiments, the method includes creating, for the received packet in the first data structure, a new entry including a key storing the packet hash of the received packet and a value, wherein the value includes a count field having a value set to one, wherein the value includes a slot for the received packet, wherein the slot for the received packet stores packet information for the received packet, wherein the packet information for the received packet includes a timestamp of the received packet, a packet size of the received packet, and a pointer to a new entry for the received packet in the second data structure. In at least some example embodiments, the new entry created for the received packet in the first data structure is created based on reuse of a least recently used entry of the first data structure. In at least some example embodiments, the method includes creating, for the received packet in the second data structure, the new entry for the received packet, wherein the new entry for the received packet includes additional packet information for the received packet, wherein the additional packet information for the received packet includes packet data of the received packet. In at least some example embodiments, the second data structure comprises a circular buffer supporting a pointer, wherein the new entry created for the received packet in the second data structure is created based on reuse of an existing entry of the second data structure currently pointed to by the pointer. In at least some example embodiments, the method includes creating, for the received packet in the third data structure, a new entry including access count information indicating, for each of the plurality of network access interfaces, respective numbers of times the received packet has been received over the respective network access interface, wherein the access count information includes a value set equal to one for the one of the network access interfaces via which the received packet was received and any remaining values for any other network access interfaces in the plurality of network access interfaces are set to zero. In at least some example embodiments, the method includes receiving, via one of the network access interfaces, the received packet, computing, based on the received packet, a packet hash of the received packet, and accepting the received packet based on a determination, based on the first data structure, that the packet hash of the received packet matches one of packet hashes of the first data structure and a determination, based on the first data structure and the second data structure, that the received packet does not match any packet having packet information stored in the respective value associated with the respective key having a packet hash matching the packet hash of the received packet. In at least some example embodiments, the method includes receiving, via one of the network access interfaces, the received packet, computing, based on the received packet, a packet hash of the received packet, and accepting the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is a retransmission. In at least some example embodiments, the method includes receiving, via one of the network access interfaces, the received packet, computing, based on the received packet, a packet hash of the received packet, and dropping the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is not a retransmission. In at least some example embodiments, determining whether to accept the received packet or drop the received packet as being a duplicate includes receiving, via one of the network access interfaces, the received packet, computing, based on the received packet, a packet hash of the received packet, determining, based on a determination that the packet hash of the received packet matches one of packet hashes of the first data structure, whether the received packet matches any packet having packet information stored in the respective value associated with the respective key having a packet hash matching the packet hash of the received packet, and determining, based on whether the received packet matches any packet having packet information stored in the respective value associated with the respective key having the packet hash matching the packet hash of the received packet, whether to accept the received packet or drop the received packet as being a duplicate. In at least some example embodiments, determining whether the received packet matches any packet having packet information stored in the respective value associated with the respective key having the packet hash matching the packet hash of the received packet includes determining whether a packet size of the received packet matches any of the packet sizes of any of the up to k packets of the respective value of the key-value pair of the respective key having the packet hash matching the packet hash of the received packet, and determining, based on a determination that the packet size of the received packet does not match any of the packet sizes of any of the up to k packets of the respective value of the key-value pair of the respective key having the packet hash matching the packet hash of the received packet, that the received packet does not match any packet having packet information stored in the respective value associated with the respective key having the packet hash matching the packet hash of the received packet. In at least some example embodiments, determining whether to accept the received packet or drop the received packet as being a duplicate includes receiving, via one of the network access interfaces, the received packet, computing, based on the received packet, a packet hash of the received packet, determining, based on the packet hash of the received packet from the respective access count information associated with the packet hash of the received packet, one of the sets of the access counts corresponding to the received packet, and determining, based on the one of the sets of access counts corresponding to the received packet, whether the received packet is a retransmission or a duplicate packet. In at least some example embodiments, determining whether the received packet is a retransmission or a duplicate packet includes incrementing, within the one of the sets of access counts corresponding to the received packet, the respective access count value associated with the of the network access interfaces over which the packet was received to provide an updated access count value for the one of the network interfaces over which the packet was received, and determining, based on a comparison of the updated access count value with other access count values in the set of access counts corresponding to the received packet, whether the received packet is a retransmission or a duplicate packet. In at least some example embodiments, the received packet is determined to be a retransmission based on a determination that the updated access count value is greater than each of the other access count values in the set of access counts corresponding to the received packet. In at least some example embodiments, the received packet is determined to be a duplicate packet based on a determination that the updated access count value is not greater than each of the other access count values in the set of access counts corresponding to the received packet. In at least some example embodiments, the first data structure, the second data structure, and the third data structure are each bounded in size. In at least some example embodiments, the first data structure comprises a hash table, the second data structure comprises a buffer map, and the third data structure comprises a retransmission map.

In at least some example embodiments, an apparatus includes means for maintaining a set of data structures including at least a first data structure, a second data structure, and a third data structure, and determining, for a received packet based on the set of data structures, whether to accept the received packet or drop the received packet as being a duplicate. The first data structure is configured to store a plurality of entries including a respective plurality of key-value pairs for a respective plurality of packet hashes, wherein, for each of the plurality of key-value pairs, the respective key-value pair includes the respective packet hash as a key and a value including, for each of up to k packets matching the respective packet hash, respective packet information for the respective packet that includes a timestamp of the respective packet, a packet size of the respective packet, and a pointer to an entry of the second data structure storing additional packet information for the respective packet. The second data structure is configured to store, for each of a plurality of packets for which respective packet information has been stored in the first data structure, the respective additional packet information for the respective packet that includes a portion of the respective packet, the packet hash of the respective packet, and an indication as to whether the packet information for the respective packet is still stored in the first data structure. The third data structure is configured to store, for each of the plurality of packet hashes of the first data structure, respective access count information including, for each of the up to k packets matching the respective packet hash, a respective set of access counts including, for each of a plurality of network access interfaces available for receipt of the respective packet, a respective access count value indicative of a number of times the respective packet has been received over the respective network access interface. In at least some example embodiments, the apparatus includes means for receiving, via one of the network access interfaces, the received packet, means for computing, based on the received packet, a packet hash of the received packet, and means for accepting the received packet based on a determination that the packet hash of the received packet does not match any of the plurality of packet hashes of the first data structure. In at least some example embodiments, the apparatus includes means for creating, for the received packet in the first data structure, a new entry including a key storing the packet hash of the received packet and a value, wherein the value includes a count field having a value set to one, wherein the value includes a slot for the received packet, wherein the slot for the received packet stores packet information for the received packet, wherein the packet information for the received packet includes a timestamp of the received packet, a packet size of the received packet, and a pointer to a new entry for the received packet in the second data structure. In at least some example embodiments, the new entry created for the received packet in the first data structure is created based on reuse of a least recently used entry of the first data structure. In at least some example embodiments, the apparatus includes means for creating, for the received packet in the second data structure, the new entry for the received packet, wherein the new entry for the received packet includes additional packet information for the received packet, wherein the additional packet information for the received packet includes packet data of the received packet. In at least some example embodiments, the second data structure comprises a circular buffer supporting a pointer, wherein the new entry created for the received packet in the second data structure is created based on reuse of an existing entry of the second data structure currently pointed to by the pointer. In at least some example embodiments, the apparatus includes means for creating, for the received packet in the third data structure, a new entry including access count information indicating, for each of the plurality of network access interfaces, respective numbers of times the received packet has been received over the respective network access interface, wherein the access count information includes a value set equal to one for the one of the network access interfaces via which the received packet was received and any remaining values for any other network access interfaces in the plurality of network access interfaces are set to zero. In at least some example embodiments, the apparatus includes means for receiving, via one of the network access interfaces, the received packet, means for computing, based on the received packet, a packet hash of the received packet, and means for accepting the received packet based on a determination, based on the first data structure, that the packet hash of the received packet matches one of packet hashes of the first data structure and a determination, based on the first data structure and the second data structure, that the received packet does not match any packet having packet information stored in the respective value associated with the respective key having a packet hash matching the packet hash of the received packet. In at least some example embodiments, the apparatus includes means for receiving, via one of the network access interfaces, the received packet, means for computing, based on the received packet, a packet hash of the received packet, and means for accepting the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is a retransmission. In at least some example embodiments, the apparatus includes means for receiving, via one of the network access interfaces, the received packet, means for computing, based on the received packet, a packet hash of the received packet, and means for dropping the received packet based on a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is not a retransmission. In at least some example embodiments, the means for determining whether to accept the received packet or drop the received packet as being a duplicate includes means for receiving, via one of the network access interfaces, the received packet, means for computing, based on the received packet, a packet hash of the received packet, means for determining, based on a determination that the packet hash of the received packet matches one of packet hashes of the first data structure, whether the received packet matches any packet having packet information stored in the respective value associated with the respective key having a packet hash matching the packet hash of the received packet, and means for determining, based on whether the received packet matches any packet having packet information stored in the respective value associated with the respective key having the packet hash matching the packet hash of the received packet, whether to accept the received packet or drop the received packet as being a duplicate. In at least some example embodiments, the means for determining whether the received packet matches any packet having packet information stored in the respective value associated with the respective key having the packet hash matching the packet hash of the received packet includes means for determining whether a packet size of the received packet matches any of the packet sizes of any of the up to k packets of the respective value of the key-value pair of the respective key having the packet hash matching the packet hash of the received packet, and means for determining, based on a determination that the packet size of the received packet does not match any of the packet sizes of any of the up to k packets of the respective value of the key-value pair of the respective key having the packet hash matching the packet hash of the received packet, that the received packet does not match any packet having packet information stored in the respective value associated with the respective key having the packet hash matching the packet hash of the received packet. In at least some example embodiments, the means for determining whether to accept the received packet or drop the received packet as being a duplicate includes means for receiving, via one of the network access interfaces, the received packet, means for computing, based on the received packet, a packet hash of the received packet, means for determining, based on the packet hash of the received packet from the respective access count information associated with the packet hash of the received packet, one of the sets of the access counts corresponding to the received packet, and means for determining, based on the one of the sets of access counts corresponding to the received packet, whether the received packet is a retransmission or a duplicate packet. In at least some example embodiments, the means for determining whether the received packet is a retransmission or a duplicate packet includes means for incrementing, within the one of the sets of access counts corresponding to the received packet, the respective access count value associated with the of the network access interfaces over which the packet was received to provide an updated access count value for the one of the network interfaces over which the packet was received, and means for determining, based on a comparison of the updated access count value with other access count values in the set of access counts corresponding to the received packet, whether the received packet is a retransmission or a duplicate packet. In at least some example embodiments, the received packet is determined to be a retransmission based on a determination that the updated access count value is greater than each of the other access count values in the set of access counts corresponding to the received packet. In at least some example embodiments, the received packet is determined to be a duplicate packet based on a determination that the updated access count value is not greater than each of the other access count values in the set of access counts corresponding to the received packet. In at least some example embodiments, the first data structure, the second data structure, and the third data structure are each bounded in size. In at least some example embodiments, the first data structure comprises a hash table, the second data structure comprises a buffer map, and the third data structure comprises a retransmission map.

### BRIEF DESCRIPTION OF THE DRAWINGS

The teachings herein can be readily understood by considering the following detailed description in conjunction with the accompanying drawings, in which:
FIG. 1 depicts an example embodiment of a communication system configured to support packet replication and deduplication for communications from a sender to a receiver;
FIG. 2 depicts an example embodiment of a sender side that includes a sender side control module configured to control application of packet replication and deduplication for communications from a sender to a receiver;
FIG. 3 depicts an example embodiment of packet replication and deduplication control policies configured to control packet replication and deduplication for communications from a sender to a receiver;
FIG. 4 depicts an example embodiment of a method for supporting selection and use of packet replication and deduplication policies for an application communicating between a sender and a receiver;
FIG. 5 depicts an example embodiment for supporting identification of access networks for packet copies, for use in distinguishing between duplicate packets and retransmitted packets, based on use association of different VLAN tags with the packets on the sender side for the different access networks;
FIG. 6 depicts an example embodiment for supporting identification of access networks for packet copies, for use in distinguishing between duplicate packets and retransmitted packets, use of separate virtual interfaces on the receiver side for the different access networks;
FIG. 7 depicts an example embodiment of a Key Value Map (KVM) and a Circular Buffer Map (CBM) for use in a hash-based packet deduplication implemented based on an eBPF;
FIG. 8 depicts an example embodiment of a Retransmission Map (RM) for use in a hash-based packet deduplication implemented based on an eBPF;
FIG. 9 depicts an example embodiment of a method for supporting hash-based packet deduplication implemented based on an eBPF;
FIG. 10 depicts an example embodiment of TSN-based packet deduplication based on tracking of maximum TSN values without packet reordering;
FIG. 11 depicts an example embodiment of TSN-based packet deduplication based on tracking of maximum TSN values with packet reordering;
FIG. 12 depicts an example embodiment of TSN-based packet deduplication based on tracking of maximum TSN values and chunk lists with packet reordering;
FIG. 13 depicts an example embodiment of pseudocode configured to support TSN-based packet deduplication in the presence of packet reordering and re-transmissions;
FIG. 14 depicts an example embodiment of a method for supporting sequence number based packet deduplication; and
FIG. 15 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting packet replication and deduplication are presented herein. Various example embodiments for supporting packet replication and deduplication may be configured to support packet replication and deduplication within the context of application flows utilizing multiple network paths based on multiple network access technologies, such as Fifth Generation (5G), 4.9G, Long Term Evolution (LTE), WiFi, Ethernet, or the like, as well as various combinations thereof. Various example embodiments for supporting packet replication and deduplication may be configured to support packet replication and deduplication for a wide range of protocols (e.g., Transmission Control Protocol (TCP), User Datagram Protocol (UDP), Internet Protocol (IP), Ethernet, or the like, as well as various combinations thereof) operating at various communication layers (e.g., Layer 2, Layer 3, Layer 4, or the like, as well as various combinations thereof). Various example embodiments for supporting packet replication and deduplication may be configured to support packet replication and deduplication for a wide range of application contexts which may require or benefit from the improved determinism, reliability, and latency which may be achieved based on packet replication and deduplication, such as autonomous vehicle control, cloud robotics, or the like, as well as various combinations thereof. Various example embodiments may be configured to support packet replication and deduplication based on support for application-based policy control for enabling applications to control selection and application of packet replication and deduplication to application traffic flows based on considerations such as the needs of the application traffic flows, network conditions, and so forth. Various example embodiments for supporting packet replication and deduplication may be configured to support packet replication and deduplication based on packet hashes (e.g., for a wide range of communication protocols which may be operating at various layers of the communication protocol stack), packet sequence numbers (e.g., for various communication protocols, such as Transmission Control Protocol (TCP), capable of leveraging Large Packet Offloads), or the like, as well as various combinations thereof. Various example embodiments for supporting packet replication and deduplication may be configured to support packet replication and deduplication in a manner for supporting dynamic, application-specific, and policy-driven access selection for application flows requiring replication and deduplication without adverse impact on other flows, with low resource consumption and negligible throughput penalty even on devices with lightweight hardware specifications, with improved determinism, reliability, and latency, or the like, as well as various combinations thereof. It will be appreciated that these as well as various other example embodiment may be further understood by first considering various contexts within which packet replication and deduplication may be necessary or desirable.

As indicated above, packet replication and deduplication may be necessary or desirable in various application contexts. For example, there are numerous industrial applications, such as autonomous vehicle control and cloud robotics, that typically demand exceptionally high determinism, characterized by low latency and unwavering reliability. However, achieving this level of performance poses a formidable challenge in many types of environments, and especially in mobile environments where the coverage and quality of wireless links are intricately tied to the geographical locations of endpoints and often subject to unpredictable fluctuations for myriad reasons. Mitigating some or all of these challenges becomes feasible by leveraging multiple access technologies, while employing sender-side replication and receiver-side deduplication. This strategic approach to transmitting identical information from the sender and handling receipt of identical information on the receiver holds the promise of consistently supporting high determinism as well as reducing or minimizing latency and enhancing overall reliability.

As indicated above, replication and deduplication of packets can be leveraged to enhance both reliability and latency for applications based on transmission of multiple copies of the application packets from the sender to the receiver across diverse access networks. This approach bolsters reliability by compensating potential packet loss on one access network with the reception of an intact copy on one or more alternate access networks. Additionally, this strategy can effectively reduce overall latency, as the receiver can prioritize the packet copy that arrives earliest. Achieving this heightened level of reliable and low-latency communication may be based on (1) a sender capable of replicating application packets, thereby generating multiple copies for transmission across multiple distinct access networks (i.e. replication) and (2) a receiver capable of seamlessly capturing application packets from diverse access networks, identifying duplicates, discarding all redundant copies except the initial received copy of each packet, and forwarding the earliest-received packet copy to the application, thereby completing the process (i.e. deduplication). Various example embodiments may be configured to support such packet replication and deduplication in various contexts.

Replication and deduplication of packets can be a resource-intensive process, often requiring significant processing and memory overhead that can result in high throughput penalties. Many existing solutions perform these functions in the user space, incurring the cost of frequent context switches between kernel space and user space, which can be very expensive. Various example embodiments for supporting packet replication and deduplication may address these limitations by providing a kernel space based solution that minimizes overhead and operates at full line rate while supporting efficient processing of packets and minimizing the impact on system resources. Various example embodiments may be configured to leverage two key technologies -- virtual switches and extended Berkeley Packet Filter (eBPF) -- to achieve replication and deduplication in kernel space for enhancing reliability and reducing latency for applications in software defined networking (SDN). The Open vSwitch (OVS) is a widely-available, SDN-based, flexible and programmable packet processing and switching capability in the Linux kernel. Meanwhile, eBPF enables the insertion and execution of user code directly in the Linux kernel without the need for additional kernel modules or changes to the kernel itself. This makes the kernel more programmable and efficient, allowing for better packet processing without the need for context switches between user and kernel space. eBPF has been widely used for developing efficient network functions, such as monitoring, security, packet filtering, and packet capturing.

Various example embodiments, as indicated above, may be configured to efficiently achieve packet replication and deduplication in kernel space by leveraging the programmability of OVS and eBPF. While efficient packet replication is already available in OVS and eBPF, packet deduplication is not a built-in functionality for either of them. Various example embodiments presented herein may be configured to provide packet replication and deduplication in kernel space by leveraging the programmability of OVS and eBPF to provide a packet replication and deduplication procedure fully in kernel space. Various example embodiments may be configured to support efficient and flexible replication of packets in the kernel space by defining rules on the sender OVS, where the rules may specify the conditions under which packets should be duplicated and the access links to which the duplicated packets are to be provided, such that multiple copies of the packets get created and sent out on the designated access links. Various example embodiments may be configured to support replication of packets in the kernel space by using eBPF mechanisms developed for deduplication for performing packet replication in kernel space. Various example embodiments may be configured to support deduplication of packets in kernel space based on packet hashes, sequence numbers, or the like, as well as various combinations thereof. Various example embodiments may be configured to distinguish between duplicate packets and retransmitted packets. It will be appreciated that various combinations of such example embodiments may be employed for supporting packet replication and deduplication within various contexts.

Various example embodiments may be configured to support packet deduplication in kernel space based on use of packet hashes. The approach based on packet hashes is protocol agnostic and enables deduplication across a wide range of protocols (although it is noted that, as discussed further below, the approach is not expected to be able to leverage Large Packet Offloads for protocols such as TCP). This approach may use a combination of packet hashes with a unique approach to small, fixed-sized fingerprints, instead of full packets, to identify duplicate packets, thereby enabling reduction or even minimization of the kernel memory needed for deduplication without sacrificing performance. This may be particularly beneficial for industrial devices with limited hardware specifications. This scheme also addresses the challenges of garbage collection and distinguishing between packet retransmissions and true duplicates. The unique data structure and algorithm maintain a bound on the number of entries and efficiently delete old entries, reducing the risk of large packet delays during garbage collection. Additionally, the scheme also may be designed to be aware of the access network on which the packet is received and to track the number of identical packets seen per access network, thereby allowing for distinguishing between retransmissions and true duplicates and supporting removal of duplicate copies of retransmitted packets. It will be appreciated that various example embodiments for supporting packet deduplication in kernel space based on use of packet hashes may be configured to support packet deduplication in kernel space in various other ways.

Various example embodiments may be configured to support packet deduplication in kernel space based on use of sequence numbers. As indicated above, while packet deduplication based on packet hashes is suitable for a wide range of protocols, it is not expected to be viable for packet deduplication while also leveraging Large Packet Offloads for protocols such as TCP. The approach based on packet sequence numbers is capable of supporting packet deduplication for reliable protocols such as TCP, thereby enabling support for Large Packet Offloads. This approach may perform packet deduplication by identifying duplicate TCP sequence number ranges received in each TCP flow. This approach, instead of relying on per-packet hashes, maintains the latest TCP sequence numbers received in each TCP flow, thereby making it possible to deduplicate TCP packets even when Large Packet Offloads are enabled on network interfaces. It will be appreciated that, although primarily described within the context of supporting packet deduplication based on packet sequence numbers within the context of TCP flows, packet deduplication based on packet sequence numbers may be supported for various other reliable protocols which utilize sequence numbers. It will be appreciated that various example embodiments for supporting packet deduplication in kernel space based on use of sequence numbers may be configured to support packet deduplication in kernel space in various other ways.

Various example embodiments may be configured to support packet replication and deduplication in kernel space while also addressing the challenge of distinguishing between duplicate and retransmitted packets. For example, various example embodiments may be configured to support packet replication and deduplication while also addressing the challenge of distinguishing between duplicate and retransmitted packets by having the sender add a unique tag (e.g., using virtual local area network (VLAN) tags and/or other suitable tag(s)) to each replicated packet copy, thereby allowing the receiver to determine which packet arrived on which access and to differentiate between duplicates and re-transmissions. For example, various example embodiments may be configured to support packet replication and deduplication while also addressing the challenge of distinguishing between duplicate and retransmitted packets by introducing the concept of use of separate virtual interfaces on the receiver side, for different access networks, for delivering packets to the deduplicator module, thereby allowing the deduplicator module on the receiver to infer the access network on which a packet was received without modifying packet tags (e.g., VLAN or otherwise) of the packets. It will be appreciated that these features enable more efficient and accurate deduplication of packets, leading to improved network performance and reduced packet loss.

Various example embodiments may be configured to leverage SDN capabilities to provide a policy framework that empowers each application to specify its specific requirements for replication and deduplication. For example, the policy framework may enable each application to specify parameters such as the direction of replication to be supported (such as uplink-only, downlink-only, or both), the scope of replication of replication to be supported (e.g., all accesses or a subset of accesses), an indication as to whether deduplication is to be supported (e.g., only replication or replication with deduplication), or the like, as well as various combinations thereof. This framework grants applications greater flexibility and control to optimize network performance according to their unique requirements. The policy framework allows for greater flexibility and control over network performance based on simplified implementation and management of network functions, by empowering each application to specify its specific requirements for replication and deduplication, thereby enabling tailoring of the solution to the unique requirements of each application.

Various example embodiments may be configured to leverage various additional components to support improved application of packet replication and deduplication in various contexts. For example, to further enhance the performance of packet replication and deduplication, a monitoring component may be used to monitor the status of access links, such as currently available bandwidth, access latency, loss rate, or the like, as well as various combinations thereof. The information obtained by the monitoring component may be used by the policy server to dynamically enable or disable replication and deduplication for individual applications, thereby ensuring that replication is only activated when its benefits to the application outweigh the negative impact on the network. For instance, replication might be necessary during handovers or when access links experience poor quality; however, replication is more resource-intensive and requires more network capacity, so it should only be enabled when necessary to avoid unnecessary strain on the network. For example, a classification component may be used to classify applications into different traffic classes through packet and traffic analysis, thereby enabling application of the appropriate set of policies for replication and deduplication to each type of application and, thus, ensuring that the solution is tailored to the specific needs of each application. It will be appreciated that various other component may be utilized to support improved application of packet replication and deduplication in various contexts.

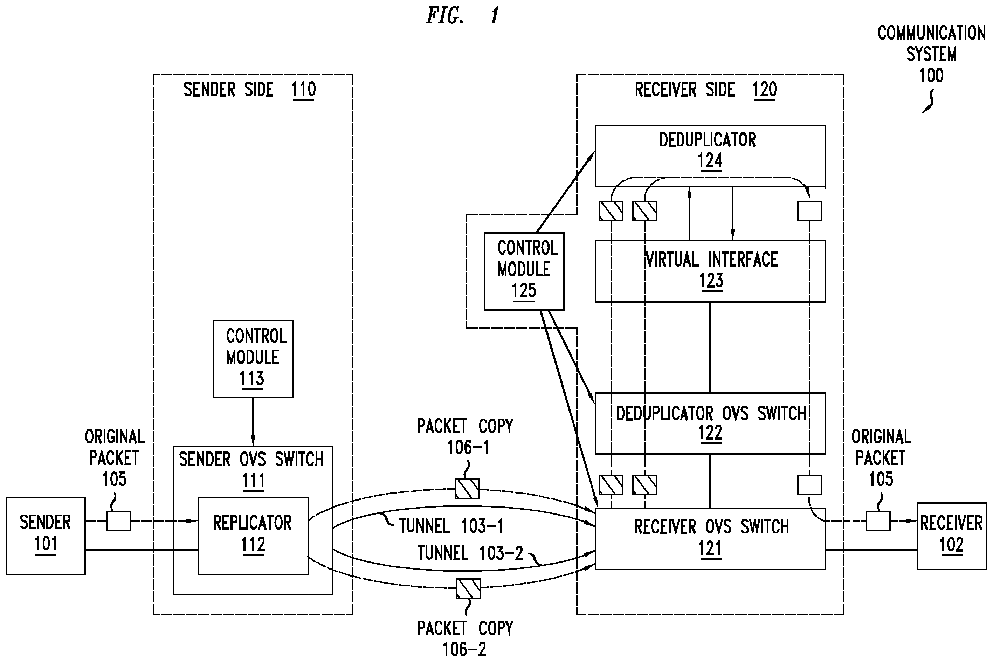

It will be appreciated that these as well as various other example embodiments may be further understood by considering an example embodiment of a communication configured to support packet replication and deduplication, as presented with respect to FIG. 1.

FIG. 1 depicts an example embodiment of a communication system configured to support packet replication and deduplication for communications from a sender to a receiver.

As illustrated in FIG. 1, the communication system 100 includes a sender 101 and a receiver 102 where the sender is configured to send packets to the receiver 102 and the receiver 102 is configured to receive packets from the sender 101. The sender 101 has associated therewith a sender side 110 configured to support packet replication for packets being delivered from the sender 101 to the receiver 102 and the receiver 102 has associated therewith a receiver side 120 configured to support packet deduplication for packets being delivered from the sender 101 to the receiver 102. The sender side 110 and the receiver side 120 may be controlled based on various SDN-based capabilities. The sender side 110 and the receiver side 120 are communicatively connected via a pair of tunnels 103-1 and 103-2 (collectively, tunnels 103) which may be associated with various access networks (e.g., 5G and LTE, LTE1 and LTE2, LTE and WiFi, or the like). The tunnels 103 may include any tunnels suitable for connecting the sender side 110 and the receiver side 120 (e.g., GRE, VXLAN, or the like, as well as various combinations thereof).

The sender side 110 includes a sender OVS switch 111 (to which the tunnels 103 are connected), a replicator 112 on the sender OVS switch 111, and a control module 113 (which is configured to program the sender OVS switch 111). The packets arriving from the sender 110 are replicated by the replicator 112 on the sender OVS switch 111 and sent over the tunnels 103 toward the receiver side 120. The packets arriving from the sender 110 are replicated by the replicator 112 on the sender OVS switch 111 based on programming of the sender OVS switch 111, by the control module 113, with packet replication rules configured to provide the replicator 112 on the sender OVS switch 111. For example, the control module 113 may program the sender OVS switch 111 with application specific policies indicative of the number of packet copies to be generated for a given packet, the set of selected accesses over which the packet copies are to be sent (illustratively, the tunnels 103), or the like, as well as various combinations thereof. For example, the OVS packet replication rules may be implemented as match-action type rules where the action is for packet replication and specifies a list of output ports of the sender OVS switch 111 on which the packet is to be sent after replication processing. For example, in order to implement this action, the kernel may create enough copies of the flow packet to ensure it has a copy of the packet per output port specified in the replication rule, and the kernel may then forward those packets out on the corresponding ports. It will be appreciated that setting the appropriate output ports in the replication rules ensures that flow packets are replicated by the kernel and are sent over different access networks (and possibly different RATs). It will be appreciated that, although primarily presented with respect to use of an OVS switch to implement the replicator 112, the replicator 112 may be implemented using an eBPF module.

The receiver side 120 includes a receiver OVS switch 121 (to which the tunnels 103 are connected), a deduplicator OVS switch 122 connected to the receiver OVS bridge 121, a virtual interface 123 which (although depicted separately) forms part of the deduplicator OVS switch 122, a deduplicator 124 connected to the virtual interface 123 of the deduplicator OVS switch 122, and a control module 125 (which is configured to program the receiver OVS switch 121, the deduplicator OVS switch 122, and the deduplicator 124). The receiver OVS switch 121 receives packet copies via the tunnels 103. The receiver OVS switch 121 is programmed by the control module 125 to recognize packet copies replicated by the sender side 110 that require deduplication on the receiver side 120 and to pass such packet copies to the deduplicator 124 via the deduplicator OVS switch 122 (including the virtual interface 123 of the deduplicator OVS switch 122). The deduplicator 124 receives the packet copies and performs packet deduplication to select, from the set of packet copies, one of the packet copies to be delivered and to discard the remaining packet copies not selected to be delivered. The deduplicator 124 may perform packet deduplication based on packet hashes (e.g., where the deduplicator may be implemented as an eBPF), packet sequence numbers (e.g., TCP sequence numbers in TCP), or the like, as well as various combinations thereof. The deduplicator 124 passes the selected packet back to the receiver OVS switch 121 via the deduplicator OVS switch 122 (including the virtual interface 123 of the deduplicator OVS switch 122). The receiver OVS switch 121 provides the selected packet to the receiver 102 (along with other packets received by the receiver OVS switch 121 that do not require deduplication).

In FIG. 1, the flow of a packet from the sender 101 to the receiver 102, including replication on the sender side 110 and deduplication on the receiver side 120, is illustrated. As illustrated, an original packet 105 is output by the sender 101 and provided to the sender OVS switch 111 on the sender side 110. The replicator 112 on the OVS switch 111 duplicates the original packet 105 to provide a pair of packet copies 106-1 and 106-2 (collectively, packet copies 106). The packet copies 106 flow over the tunnels 103 to the receiver OVS switch 121 (illustratively, packet copy 106-1 flows over tunnel 103-1 and packet copy 106-2 flows over tunnel 103-2). The receiver OVS switch 121 recognizes the replicated packet copies 106 and provides the packet copies 106 to the deduplicator OVS switch 122. The deduplicator OVS switch 122 forwards the packet copies 106 to the deduplicator 124 via the virtual interface 123. The deduplicator 124 performs packet deduplication on the packet copies 106 to recover the original packet 105. The deduplicator 124 forwards the recovered original packet 105 to the deduplicator OVS switch 122 via the virtual interface 123. The deduplicator OVS switch 122 receives the original packet 105 and forwards the original packet 105 to the receiver OVS switch 121. The receiver OVS switch 121 receives the original packet 105 and forwards the original packet 105 to the receiver 102. In this manner, the original packet 105 is more reliably provided from the sender 101 to the receiver 102 based on use of multiple access networks.

It will be appreciated that the combination of the packet replication and deduplication capabilities enables support for a highly flexible solution in which replication policies may be defined and applied differently to packets of different flows of applications in terms of various parameters such as direction of replication (e.g., uplink-only, downlink-only, or both), scope of replication (e.g., a subset of accesses), whether deduplication is needed (e.g., only replication or replication with deduplication), or the like, as well as various combinations thereof.

It will be appreciated that the communication system 100 may include various other elements and capabilities configured to support packet replication and deduplication for improved communication reliability.

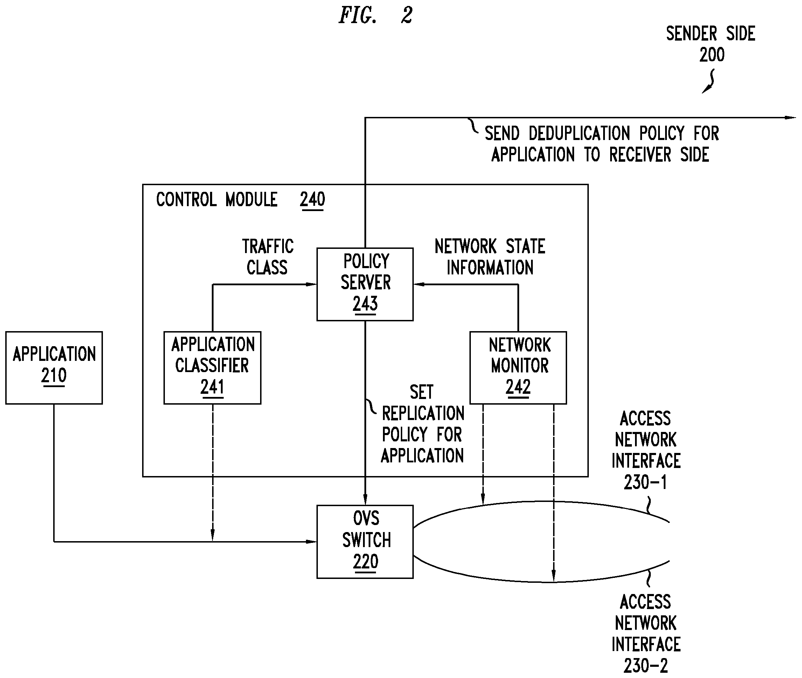

FIG. 2 depicts an example embodiment of a sender side that includes a sender side control module configured to control application of packet replication and deduplication for communications from a sender to a receiver.

As depicted in FIG. 2, the sender side 200 includes an application 210, an OVS switch 220, a pair of access network interfaces 230-1 and 230-2 (collectively, access network interfaces 230), and a control module 240. The application 210 generates application traffic which is provided to the OVS switch 220 for transmission toward a receiver side (omitted for purposes of clarity) over either or both of the access network interfaces 230 depending on whether packet replication is applied for the application 210. The control module 240 is configured to control application of packet replication and deduplication to the packet traffic of the application 210. The control module includes an application classifier 241, a network monitor 242, and a policy server 243.

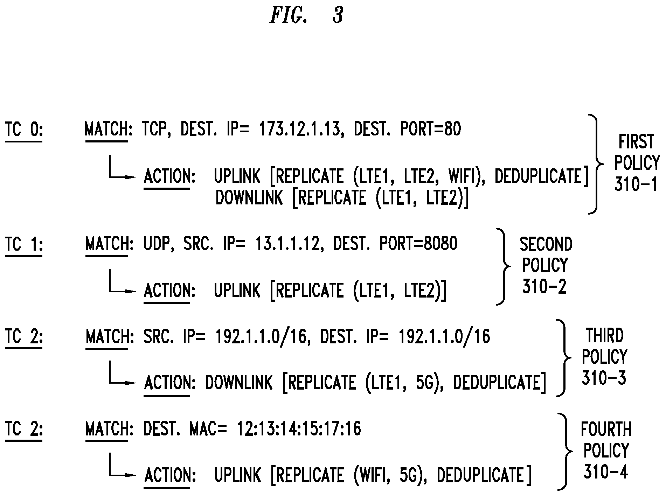

The application classifier 241 may be configured to examine packet traffic from the application 210, identify the traffic class of the application 210, and provide an indication of the traffic class of the application 210 to the policy server 243 for use by the policy server 243 in selecting a replication and deduplication policy to be applied for the application 210. The application classifier 241, as illustrated in FIG. 2, may identify the traffic class of the application based on examination of packet traffic between the application 210 and the OVS switch 220. It will be appreciated that various different traffic classes may be supported and may be defined in various ways based on various parameters or combinations of parameters (as may be further understood by way of reference to FIG. 3).

The network monitor 242 may be configured to continuously monitor the network state and report network state information to the policy server 243 for use by the policy server 243 in selecting a replication and deduplication policy to be applied for the application 210. For example, the network monitor 242 may report the initial network state, changes in network state, or the like, as well as various combinations thereof. The network monitor 242, as illustrated in FIG. 2, may monitor the network state based on monitoring of the network access interfaces 230. The network state may be used by the policy server 243 for comparison with the traffic classes to determine appropriate application of replication and deduplication to specific applications or groups of applications. It will be appreciated that various different network state related parameters may be supported and may be determined in various ways based on various monitoring techniques (as may be further understood by way of reference to FIG. 3).

The policy server 243 may be configured to determine the replication and deduplication policy to be applied for the application 210. The policy server 243 may determine the replication and deduplication policy to be applied for the application 210 based on at least one of the information from the application classifier 241 or the information from the network monitor 242, as well as based on a set of replication and deduplication policies pre-configured in the system and available for use by the policy server 243. For example, the policy server 243 may select one of the pre-configured replication and deduplication policies to be applied for the application 210 based on at least one of the information from the application classifier 241 or the information from the network monitor 242.

The policy server 243 may have a high degree of versatility in policy creation, selection, and application. The packet replication and deduplication policies may be defined for traffic classes and may be of the "match-action" where detection of a matching condition results in application of the associated action. The match conditions may be used to target individual applications or groups of applications, and may be based on parameters such as application types, protocol types, IP addresses and subsets, port numbers, MAC addresses, VLAN tags, or the like, as well as various combinations thereof. The actions may specify various aspects regarding the scope and manner of the application of packet replication and deduplication policies, such as whether to apply replication with deduplication or replication without deduplication, whether application of replication / deduplication is applied in a single direction (uplink only or downlink only) or in both directions (both uplink and downlink), the network accesses to be used for replication, or the like, as well as various combinations thereof. It is noted that these policies allow for the creation of custom traffic classes based on application QoS requirements and associating them with the packet replication and deduplication policies, and the traffic classes support evaluation of the network conditions that are appropriate for applying replication and deduplication to specific applications or groups of applications. It will be appreciated that definition and use of such packet replication and deduplication policies may be further understood with respect to example policies presented in FIG. 3.

The policy server 243 may be configured to control programming of the system to apply the replication and deduplication policy to be applied for the application 210. For replication on the sender side, the policy server 243 programs the OVS switch 220 with the appropriate flow rules for replication across the network access interfaces BBB. For deduplication on the receiver side (which is omitted for purposes of clarity), the policy server 243 informs the corresponding receiver side policy module of the receiver side control module on the receiver side of the replication and deduplication policy to be applied for the application 210, such that the receiver side policy module of the receiver size control module on the receiver side can program the receiver side to apply the appropriate deduplication for the application 210. This enables the replication and corresponding deduplication rules to be simultaneously set on the local OVS switches on both sides.

The policy server 243 may be configured to determine when to disable application of packet replication and deduplication for the application and to control programming of the system to stop applying packet replication and deduplication for the application 210. The policy server 243 may decide that packet replication and deduplication are no longer needed for the application 210 based on at least one of information from the application classifier 241 or information from the network monitor 242. The policy server 243 may decide that packet replication and deduplication are no longer needed for the application 210 based on policy changes. The policy server 243, based on a determination that packet replication and deduplication is to be deactivated for the application 210, withdraws any replication flow rules from the OVS switch 220 and informs the corresponding receiver side policy module of the receiver size control module on the receiver side that the deduplication flow rules are to be withdrawn from the OVS switch on the receiver side. This enables replication to be used only when necessary, thereby ensuring that packet replication and deduplication is only activated when the benefits to the application outweigh the negative impact on the network and, thus, optimizing the use of network capacity.

It will be appreciated that, although primarily presented with respect to example embodiments in which the policy server 243 selects the replication and deduplication policy to be applied for the application 210 and provides an indication of the selected replication and deduplication policy for the application 210 to network for use by the network in applying packet replication and deduplication based on the selected replication and deduplication policy for the application 210 (e.g., to the OVS switch 220 for use by the OVS switch in performing replication on the sender side and, optionally, to an OVS switch on the receiver side for use by the OVS switch on the receiver side for performing deduplication on the receiver side), in at least some example embodiments the application classifier 241 may provide an indication of the traffic class of the application 210 to the network for use by the network in selecting a replication and deduplication policy for the application 21 and applying the selected replication and deduplication policy for the application 210. In at least some such example embodiments, for example, the application classifier 241, where replication and deduplication policies are preconfigured within the network (e.g., on OVS switches in the data path of the application 210), may communicate an indication of the traffic class of the application 210 to the OVS switch 220 directly (e.g., in-band such as by marking the traffic with tags or other identifiers that indicate the traffic class of the application 210, out-of-band using one or more control messages, or the like) for use by the OVS switch 220 in selecting a replication and deduplication policy to be applied for the application 210 for performing replication on the sender side and, optionally, to an OVS switch on the receiver side for use by the OVS switch on the receiver side for performing deduplication on the receiver side. It will be appreciated that selection and application of the replication and deduplication policy for the application 210 may be provided in other ways.

It will be appreciated that, although primarily presented with respect to an example embodiment in which application of packet replication and deduplication to packet traffic of an application is controlled by a pair of control modules on the sender side and the receiver side, in at least some example embodiments application of packet replication and deduplication to packet traffic of an application may be controlled by a centralized control module that receives information from the sender side and/or the receiver side and provides packet replication and deduplication configuration information to the sender side (e.g., packet replication configuration information for configuring the sender side to perform packet replication) and the receiver side (e.g., packet deduplication configuration information for configuring the receiver side to perform packet deduplication).

FIG. 3 depicts an example embodiment of packet replication and deduplication control policies configured to control packet replication and deduplication for communications from a sender to a receiver.

In FIG. 3, four example policies 310 are illustrated. As illustrated in FIG. 3, each of the policies 310 has an associated traffic class, a match condition, and an action to be performed when the match condition is detected.

The traffic classes may be defined in various ways. The supported traffic classes in this example include: (a) Traffic Class 0 (TC 0), which supports packet delivery with less than 100 ms of latency, (b) Traffic Class 1 (TC 1), which supports Best Effort packet delivery, and (c) Traffic Class 2 (TC 2), which supports packet delivery with less than 20 ms of latency and packet loss less than 0.1%. It will be appreciated that traffic classes may be defined in various other ways (e.g., based on various combinations of parameters), various other traffic classes may be used, or the like, as well as various combinations thereof.

The match conditions may be defined in various ways. The match conditions may be defined based on information available in the packet headers for identifying packets of particular application flows. For example, the match conditions may be based on protocol types (e.g., TCP, UDP, or the like, as well as various combinations thereof), addresses (e.g., source and/or destination IP addresses, source and/or destination MAC addresses, or the like, as well as various combinations thereof), port numbers (e.g., TCP port numbers, UDP port numbers, or the like, as well as various combinations thereof), VLAN tags, or the like, as well as various combinations thereof. The match conditions may be based on tags attached to the packets by the application classifier, where the tags may indicate the traffic class of the application (e.g., web, VoIP, streaming, videoconferencing, file transfer, or the like) and/or other type of information. It will be appreciated that match conditions may be defined based on various other types of information.

The action to be performed for a detected match condition may be defined in various ways. The action to be performed may specify whether or not replication and/or deduplication is to be performed. The action to be performed may specify, for each of the uplink direction and the downlink direction, whether or not replication and/or deduplication is to be performed. The action to be performed may specify, for replication, the one or more accesses over which replication is to be performed. For example, the action to be performed may be specified as follows: (1) for uplink: replication on/off (one or more accesses), deduplication on/off and (2) for downlink: replication on/off (one or more accesses), deduplication on/off. It will be appreciated that the action to be performed may be specified in various other ways.

In a first policy 310-1, which is defined for Traffic Class Zero (TC 0), if the packet includes TCP traffic with dst_IP 173.12.1.13 and dst_port 80 (i.e., Match: TCP, Dst-IP = 173.12.1.13, Dst Port = 80), then replication and deduplication are enabled / disabled as follows: for uplink enable replication over (LTE1, LTE2, WiFi) and enable deduplication, and for downlink enable replication over (LTE1, LTE2) and disable deduplication (i.e., Action: Uplink [Replicate (LTE1, LTE2, WiFi); Deduplicate], Downlink [Replicate (LTE1, LTE2)]).

In a second policy 310-2, which is defined for Traffic Class One (TC 1), if the packet includes UDP traffic with src_IP 13.1.1.12 and dst_port 8080 (i.e., Match: UDP, Src-IP = 13.1.1.12, Dst Port = 8080), then replication and deduplication are enabled / disabled as follows: for uplink enable replication over (LTE1, LTE2) and disable deduplication, and for downlink disable replication and deduplication (i.e., Action: Uplink [Replicate (LTE1, LTE2)]).

In a third policy 310-3, which is defined for Traffic Class 2 (TC 2), if the packet includes src_IP 192.1.0.0/16 and dst_IP 192.1.0.0/16 (i.e., Match: Src-IP = 192.1.0.0/16, Dst-IP = 192.1.0.0/16), then replication and deduplication are enabled / disabled as follows: for uplink disable replication and deduplication, and for downlink enable replication over (LTE1,5G) and disable deduplication (i.e., Action: Downlink [Replicate (LTE1, 5G)]).

In a fourth policy 310-4, which is defined for Traffic Class 2 (TC 2), if the packet includes Dest MAC 12:13:14:15:17:16 (i.e., Match: Dst-MAC = 12:13:14:15:17:16), then replication and deduplication are enabled / disabled as follows: for uplink enable replication on (Wi-Fi,5G) and enable deduplication, and for downlink disable replication and deduplication (i.e., Action: Uplink [Replicate (WiFi, 5G), Deduplicate]).

It will be appreciated that replication and deduplication policies may be defined in various other ways (e.g., based on other match conditions, based on other combinations of support for replication and/or deduplication on uplink and/or downlink flows, or the like, as well as various combinations thereof).

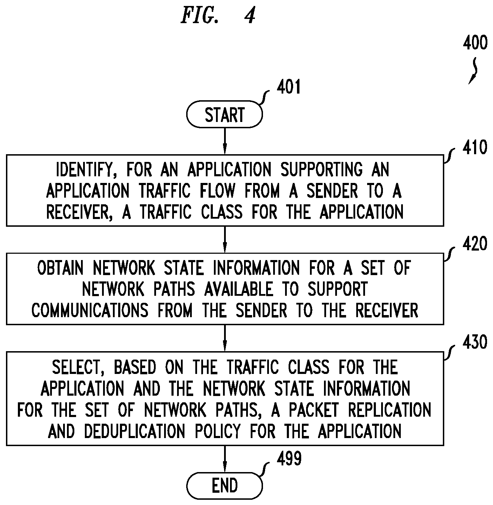

FIG. 4 depicts an example embodiment of a method for supporting selection and use of packet replication and deduplication policies for an application communicating between a sender and a receiver. It will be appreciated that, although primarily presented as being performed serially, at least a portion of the functions of method 400 may be performed contemporaneously or in a different order than as presented with respect to FIG. 4. At block 401, the method 400 begins. At block 410, identify, for an application supporting an application traffic flow from a sender to a receiver, a traffic class for the application. At block 420, obtain network state information for a set of network paths available to support communications from the sender to the receiver. At block 430, select, based on the traffic class for the application and the network state information for the set of network path, a packet replication and deduplication policy for the application. At block 499, the method 400 ends. The traffic class may be identified based on analysis of the application traffic flow. the set of network paths may be supported based on at least two access network types. The at least two network access types may include at least one of a long term evolution (LTE) network, a fifth generation (5G) cellular network, or a WiFi network. The packet replication and deduplication policy may include an indication of a number of packet copies to be made for each packet of the application traffic flow and an indication of the network paths over which the packet copies are to be communicated. The packet replication and deduplication policy may include an indication of network access types to be used for the network paths. The packet replication and deduplication policy may include an indication as to whether to perform packet replication without deduplication or packet replication with deduplication. The indication of the packet replication and deduplication policy may be provided toward at least one of a sender side device associated with the sender or a receiver side device associated with the receiver. The packet replication and deduplication policy may be selected on a sender side device associated with the sender, and an indication of the packet replication and deduplication policy may be provided from the sender side device toward a receiver side device associated with the receiver. The packet replication and deduplication policy may be selected on a receiver side device associated with the receiver, and an indication of the packet replication and deduplication policy may be provided from the receiver side device toward a sender side device associated with the sender. The packet replication and deduplication policy may be selected on a controller, and an indication of the packet replication and deduplication policy may be provided from the controller toward a sender side device associated with the sender and toward a receiver side device associated with the receiver. The packet replication and deduplication policy may include at least one match condition for identifying packets to which to apply the packet replication and deduplication policy, and the at least one match condition may be based on at least one of an application type, a protocol type, an internet protocol subnet, an internet protocol address, a port number, a media access control address, or a virtual local area network tag. The method may include features of receive, by a sender side device from the sender, a packet of the application traffic flow, create, by the sender side device using a replication process that is based on the packet replication and deduplication policy, a set of packet copies of the packet, and forward, by the sender side device toward the receiver over the set of network paths, the packet copies of the packet. The method may include features of receive, by a receiver side device, a set of packet copies of a packet of the application traffic flow, select, by the receiver side device using a deduplication process that is based on the packet replication and deduplication policy, one of the packet copies to be used as the packet of the application traffic flow at the receiver, and forward, by the receiver side device toward the receiver, the one of the packet copies to be used as the packet of the application traffic flow at the receiver. The deduplication process may include a packet hash based packet deduplication process or a sequence number based packet deduplication process. The method may include a feature of select a new packet replication and deduplication policy for the application based on a change in the network state information for the set of network paths. It will be appreciated that various other functions described herein as supporting selection and use of packet replication and deduplication policies for an application may be implemented within the context of the method 400 of FIG. 4.

As described above, two different, efficient approaches for identifying and eliminating duplicate packets are provided: one based on packet hashes and the other based on packet sequence numbers in the packet headers. The first approach based on packet hashes is protocol agnostic and enables deduplication across an extensive range of protocols, spanning from Layer 4 to Layer 2, encompassing TCP, UDP, IP, Ethernet, and more. However, the first approach has the drawback that it is not expected to be able to take advantage of Large Packet Offloads for protocols such as TCP. In contrast, the second approach based on packet sequence numbers in the packet headers is specifically designed for protocols that use sequence numbers, such as TCP, and can leverage Large Packet Offloads for these protocols. It will be appreciated that various aspects of these approaches for packet de-deduplication may be further understood by first considering various aspects of large packet offloads and the potential impacts of large packet offload on packet deduplication.

Modern commodity network interface cards (NICs) are often equipped with hardware offloads for TCP packets. Common TCP hardware offloads include Large Receive Offload (LRO) and TCP Segmentation Offload (TSO). With LRO, when a NIC receives packets belonging to the same TCP flow back-to-back in short time intervals, the NIC coalesces them into larger ones, even beyond the MTU size, before delivering them to host CPUs. This effectively reduces packets per second seen by host CPUs and the network stack, which in turn reduces the per-packet CPU overhead for interrupt processing and protocol stack processing, as well as improves inbound network throughput. TSO, on the other hand, performs an opposite action on the packet transmission side. With TSO enabled, the network stack can send to a NIC an arbitrarily large TCP packet beyond the MTU size (up to 64KB), and the NIC converts the packet into multiple (MTU-sized) TCP packets before transmission. This transmitter offload reduces the CPU overhead for TCP protocol processing (e.g., TCP segmentation) and improves outbound network throughput.

Additionally, besides hardware offloads, similar software-based offloads are often available in modern operating systems for both the packet reception side and the packet transmission side. In Linux, for example, Generic Receive Offload (GRO), which is a software-based implementation of LRO, is invoked by the Linux kernel right after packet receipt and before network protocol stack traversal. On the other hand, Generic Send Offload (GSO), which is the software equivalent of TSO, is implemented within the network device drivers. As with LRO/TSO, GRO/GSO also can help to reduce the CPU overhead for per-packet TCP protocol processing (e.g., TCP segmentation) and improve outbound network throughput, even without any hardware assistance.

These types of hardware/software-based offloads are collectively called "Large Packet Offloads", reflecting the fact that they enable applications and network protocol stacks to process "large" packets beyond the MTU size, thereby improving overall network throughput. When Large Packet Offloads are applied for TCP, they can simply be referred to as "TCP offloads". While TCP offloads are commonly used to improve the efficiency of TCP packet processing, they can interfere with per-packet deduplication (e.g. based on packet hashes) for the following reason. Packet-level deduplication operates under the assumption that the deduplicator will receive multiple same copies of each packet via different network interfaces as replicated on the sender-side. However, when TCP offloads are enabled, the receiver-side network interfaces or operating system will try to coalesce incoming packets with LRO or GRO before handling them over to the deduplicator. In this case, replicated packets may be coalesced differently by LRO/GRO of each network interface since inter-arrival times and sequences of incoming packets may vary across different interfaces, depending on the underlying network access characteristics. As a result, after LRO/GRO, the deduplicator may see packet streams with different packet sizes arriving from different network interfaces and, hence, will not be able to perform deduplication on a per-packet basis. As discussed further below, sequence number based approaches for packet deduplication may be used to mitigate or bypass the interference between TCP offloads and deduplication.

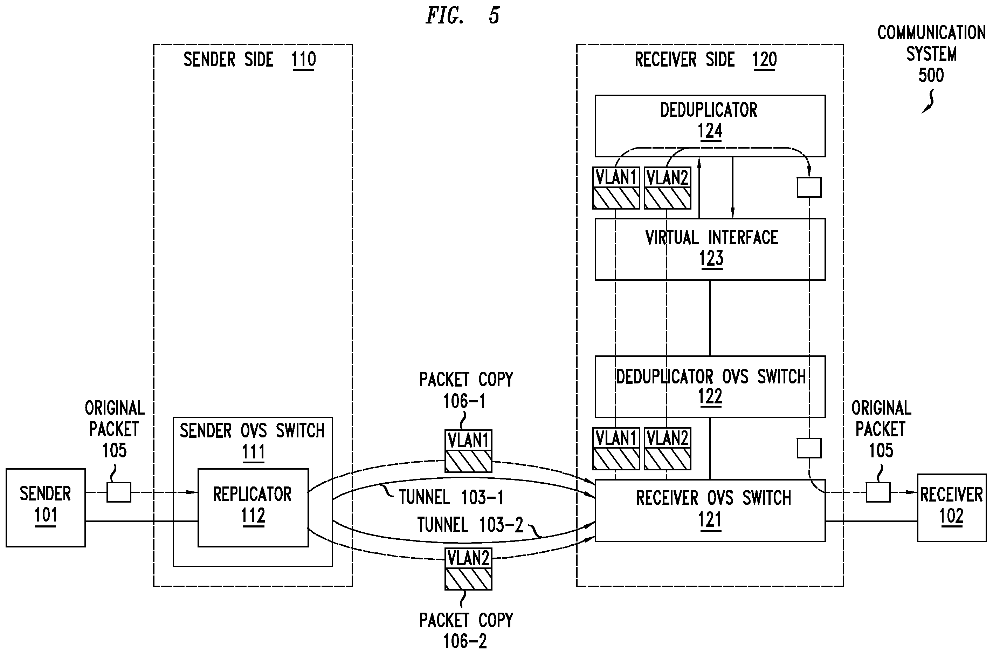

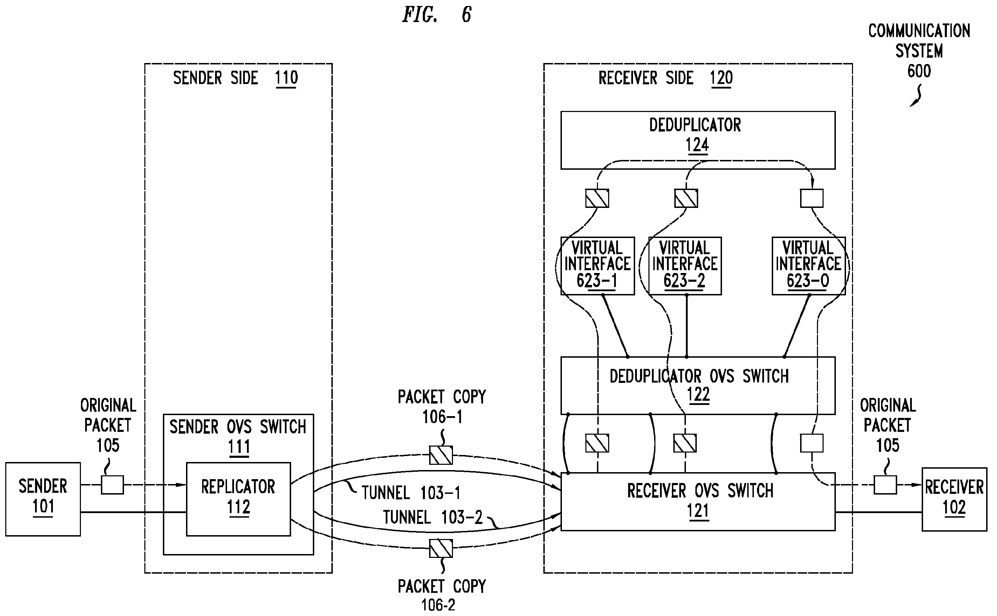

Before describing procedures for performing packet deduplication based on packet hashes and /or packet sequence numbers, mechanisms for supporting identification of access networks for received packets, for use in distinguishing between duplicate packets and re-transmitted packets, are described. The ability to distinguish between duplicate packets and re-transmitted packets is useful in various contexts, and especially for reliable protocols such as TCP that re-transmit lost packets. This is crucial because the deduplicator must discard duplicate packets while allowing re-transmitted packets to reach the receiver; however, it can be challenging to distinguish between duplicate packets and retransmitted packets, as both carry the same information. Additionally, it also may be difficult to distinguish between the duplicate of the first re-transmission of a packet and the second re-transmission of the same packet, and so forth. The identification of the access networks for received packets may be leveraged in various cases to distinguish between duplication packets and retransmitted packets. The identification of the access networks for received packets may be supported in various ways, such as based on addition of unique identifiers to packet copies (e.g., as illustrated with respect to FIG. 5), based on use of separate virtual interfaces on the receiver side for the different access networks (e.g., as illustrated with respect to FIG. 6), or the like, as well as various combinations thereof.

FIG. 5 depicts an example embodiment for supporting identification of access networks for packet copies, for use in distinguishing between duplicate packets and retransmitted packets, based on use association of different VLAN tags with the packets on the sender side for the different access networks. As illustrated in FIG. 5, communication system 500 of FIG. 5 is similar to communication system 100 of FIG. 1, except that unique VLAN tags are associated with the packet copies 106 to identify the tunnels 103 on which the packet copies 106 are sent (illustratively, a VLAN tag denoted as VLAN1 is added to packet copies 106-1 sent over the tunnel 103-1 and a VLAN tag denoted as VLAN2 is added to the packet copy 106-2 sent over the tunnel 103-2). The sender OVS switch 111 on the sender side 110 adds the VLAN tags to the packet copies 106 and the deduplicator 124 on the receiver side 120 removes the VLAN tags from the packet copies 106 (or at least from the one of the packet copies 106 selected for forwarding toward the receiver 102 as the original packet 105. In this manner, the VLAN tags may be used to identify the access network on which the packet copies 106 are sent by the sender side 110 and the access network on which the packet copies 106 are received by the receiver side 120. The deduplicator 124, based on the VLAN tags associated with the packet copies 106, can determine the network interfaces on which packet copies 106 were received and, with this additional information, can differentiate between duplicate packets and retransmitted packets. It will be appreciated that, although primarily presented with respect to use of a particular type of unique identifier to identify the network access interfaces with which the packet copies are associated (namely, VLAN tags), various other identifier types may be used for this purpose.

FIG. 6 depicts an example embodiment for supporting identification of access networks for packet copies, for use in distinguishing between duplicate packets and retransmitted packets, use of separate virtual interfaces on the receiver side for the different access networks. As illustrated in FIG. 5, communication system 500 of FIG. 5 is similar to communication system 100 of FIG. 1, except that separate virtual interfaces 623 are introduced on the receiver side 120 to enable the deduplicator 124 to identify, through inference, the tunnels 103 on which the packet copies 106 are received (illustratively, packet copy 106-1 received over the tunnel 103-1 is provided to the deduplicator 124 via the virtual interface 623-1 and packet copy 106-2 received over the tunnel 103-2 is provided to the deduplicator 124 via the virtual interface 623-2). As further illustrated, the receiver side OVS (namely, the receiver OVS switch 121 and the deduplicator OVS switch 122) may be augmented to deliver packets to the deduplicator 124 over the virtual interfaces 623 corresponding to the network accesses (tunnels 103) on which the packets were received, thereby allowing the deduplicator 124 to infer the access networks on which the packets were received and, with this additional information, can differentiate between duplicate packets and retransmitted packets. It will be appreciated that this approach ensures that the deduplicator 124 has the necessary information to accurately identify the access network on which a packet was received, without the need for additional modifications or changes to the packets, which may be useful in various situations (e.g., when the packets received from the sender are already VLAN tagged and these VLAN tags should not be modified by the sender side replicator).

Various example embodiments for supporting packet replication and deduplication may be configured to support packet deduplication based on packet hashes. It will be appreciated that, although primarily presented within the context of supporting deduplication for flows based on use of an eBPF, various example embodiments for supporting deduplication based on packet hashes may be configured to support packet deduplication based on various other elements which may utilize packet hashes for packet deduplication.

While comparison of packet contents is a viable mechanism for identifying duplicate packets, there are a number of challenges with this approach. As discussed further below, for example, some challenges associated with this approach include various challenges associated with use of packet fingerprints, various challenges associated with garbage collection, various challenges associated with packet retransmissions, and so forth.

As indicated above, use of packet fingerprints for identification of duplicate packets may have certain challenges associated therewith. While duplicate packets can be identified by comparing the contents of the packets, storage of full packets for an amount of time sufficient to enable identification of duplicate packets may potentially use large amounts of kernel memory. This may be particularly challenging when dealing with multiple access networks operating at high speeds and high worst-case delay differentials. Various example embodiments for packet deduplication based on packet hashes, as presented herein, may overcome this challenge by using small, fixed-size packet fingerprints instead of full packets. These fingerprints contain a small hash of the packet content, a small portion of the packet data, and the packet size. This approach allows for reduction or even minimization of the amount of kernel memory required for deduplication without sacrificing performance. Additionally, it is more feasible for industrial devices with limited hardware specifications to use this approach.

As indicated above, supporting garbage collection within the context of identification of duplicate packets may have certain challenges associated therewith. In order to prevent memory usage from growing over time, it is essential to delete stale entries. This can be achieved through periodic garbage collection, where old packet fingerprints are identified and removed from memory. However, in many implementations, garbage collection can be CPU-intensive and lead to large packet delays. Various example embodiments for packet deduplication based on packet hashes, as presented herein, may overcome this challenge based on use of a data structure and associated algorithm that maintains a bound on the number of entries and can efficiently make room for new entries by incrementally deleting old entries as needed.

As indicated above, supporting packet retransmissions within the context of identification of duplicate packets may have certain challenges associated therewith. As described earlier, packet retransmissions can be mistakenly identified as duplicates by the deduplicator, which can result in improper discarding of retransmitted packets. Various example embodiments for packet deduplication based on packet hashes, as presented herein, may overcome this challenge based on design of the deduplicator to be aware of the access network on which the packet is received in combination with an approach of tracking the number of identical packets seen per access network, thereby enabling the deduplicator to distinguish re-transmissions from true duplicates. Additionally, this may enable the deduplicator to identify and remove duplicate copies of retransmitted packets, ensuring that all true duplicates are effectively removed and also, that only true duplicates are removed.

In at least some example embodiments, the deduplicator may be implemented as an eBPF program which is attached to the ingress TC filter hook for the virtual interface(s) from which the deduplicator receives incoming packets. This allows the eBPF-based deduplicator to read each received packet in its entirety (e.g., VLAN header, if used, packet header, and payload), modify the packet if necessary (e.g., strip off a VLAN header), as well as access interface index information stored in packet metadata, which identifies the virtual network interface for the received packet in case multiple virtual network interfaces are utilized to differentiate among different network accesses

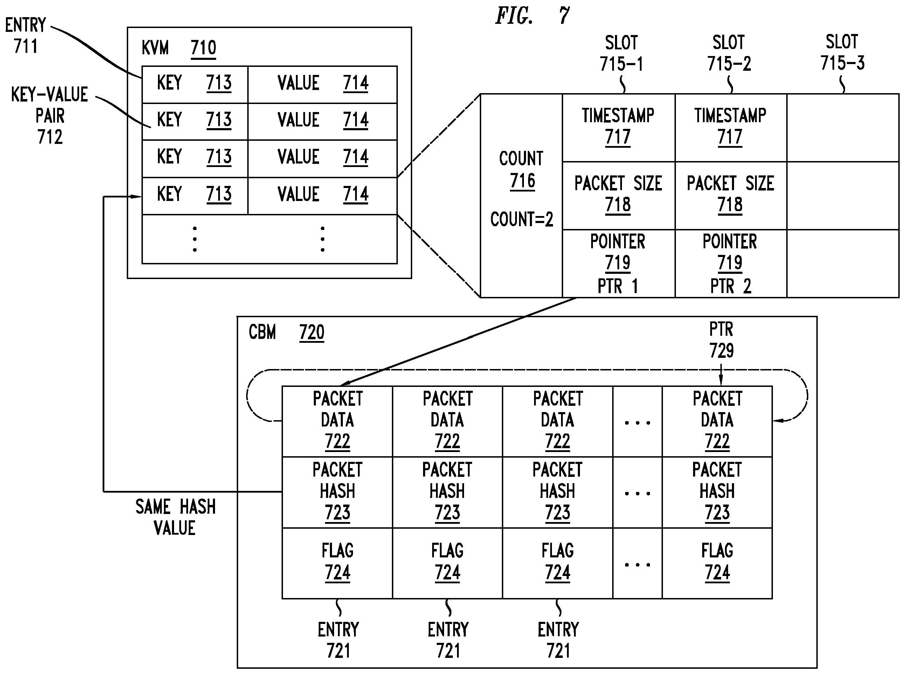

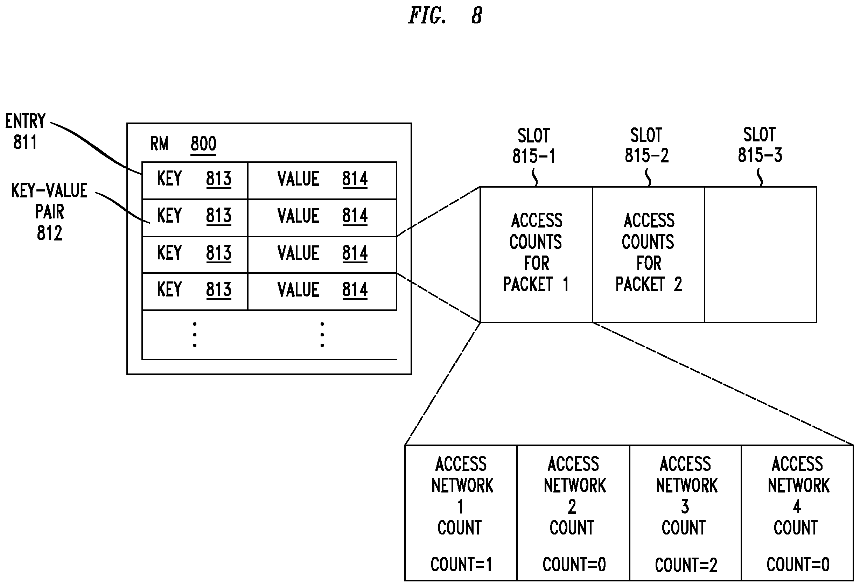

Where the deduplicator is implemented as an eBPF program, the following three data structures based on eBPF maps may be used: (1) a Key Value Map (KVM), (2) a Circular Buffer Map (CBM), and (3) a Retransmission Map (RM). An example embodiment of a KVM and its associated CBM are illustrated in FIG. 7, and an example embodiment of an RM is illustrated in FIG. 8.

As noted above, a first data structure used when the hash-based deduplicator is implemented as an eBPF program is a KVM (or hash table). An example embodiment of a KVM 710 is depicted in FIG. 7. The KVM 710 is of a fixed preconfigured size. The KVM 710 includes a set of entries 711, with each entry 711 being a key-value pair 712 including a key 713 and an associated value 714. The key 713 of a key-value pair 712 is a fixed size (e.g., 64 bits or other suitable size) hash of a packet. The value 714 of the key-value pair 712 is a data structure that includes a set of k slots 715 (for purposes of clarity, example embodiments are presented with respect to k=3; however, it will be appreciated that other suitable values may be used) configured to store packet information for packets matching the packet hash used as the key 713 of the key-value pair 712 and a count 716 indicative of a number of the slots 715 currently storing packet information in the value 714 of the key-value pair 712. Within the value 714 of the key-value pair 712, for each slot 715 storing packet information, the slot 715 includes a timestamp 717 of a time at which the packet was received, a packet size 718 of the packet, and a pointer 719 to an entry in the CBM where additional information for the packet is stored. In the example of FIG. 7, for the highlighted key-value pair 712, the associated value 714 includes three slots 616 (k=3) which provides room for storing information for three packets and packet information is stored for two packets (a first packet with the pointer value of PTR1 in the first slot 715-1 and a second packet with the pointer value of PTR2 in the second slot 715-2), which means there is room to store information for one more packet (indicated by the blank entries in the third slot 715-3).

As noted above, a second data structure used when the hash-based deduplicator is implemented as an eBPF program is a CBM. An example embodiment of a CBM 720, illustrating its relationship to the KVM 710, is depicted in FIG. 7. The CBM 720 is a fixed preconfigured size array of entries 721. In the CBM 720, each entry 721 in the array is a data structure that includes (1) a packet data buffer, which is a fixed size (e.g., 64B or other suitable size) buffer, that stores packet data 722 that includes a portion of the packet data of the packet, such as its header (e.g., the first 64B of packet data), (2) a packet hash field which is a fixed size (e.g., 64 bits or other suitable size) field that stores the packet hash 723 of the packet (i.e., the same packet hash of the packet that is stored in the key 713 of the key-value pair 712 in the KVM 710), and (3) a Flag field which is a Boolean field including a flag 724 that indicates whether the entry 721 is still stored in the KVM 710. The CBM 720 is a circular buffer and a pointer (denoted as PTR 729) marks the position in the CBM 720 where information for the next packet will be added. In the example of FIG. 7, each of the entries 721 is storing additional packet information for packets having entries in the KVM 710.

As noted above, a third data structure used when the hash-based deduplicator is implemented as an eBPF program is an RM, which is an eBPF map that supplements the information stored for packets in the KVM by maintaining access counts for each of the network accesses supported by the deduplicator. An example embodiment of an RM 800 is depicted in FIG. 8. The RM 800 is of a fixed preconfigured size, which is the same fixed, preconfigured size as the associated KVM. The RM 800 includes a set of entries 811, with each entry 811 being a key-value pair 812 including a key 813 and an associated value 814. The key 813 of a key-value pair 812 is a fixed size (e.g., 64 bits or other suitable size) hash of a packet that is the same as the key in the KVM. The value 814 of the key-value pair 812 is a data structure with a set of k slots 815 (for purposes of clarity, example embodiments are presented with respect to k=3; however, it will be appreciated that other suitable values may be used) that store access count information for the up to k packets that are in the KVM for the key 813. Within a slot 815 for a packet of the key-value pair 812, the slot 815 includes a set of n fields 816 corresponding to the n access networks supported by the deduplicator (for purposes of clarity, example embodiments are presented with respect to n=4; however, it will be appreciated that the deduplicator may support fewer or more access networks), which maintain counts of the number of copies of that packet seen on the access networks, respectively. In the example of FIG. 8, for the four access networks supported by the deduplicator, the packet has been seen once on Access Network 1, twice on Access Network 3, and has not been seen on Access Network 2 and Access Network 4.

It is noted that, in the KVM, up to k hash collisions are handled. This is based on storage of information for up to k colliding packets. It will be appreciated that "k" can be chosen to be smaller or larger depending on the number of hash collisions expected in the worst case. The drawback of keeping k small is that it may not be possible to detect a hash collision between two different packets, which may cause the deduplication function to incorrectly discard a packet as it may think that the colliding packet is a duplicate of the other packet even though it is not.

When a new packet P arrives, a hash P_H is computed for the packet. Next, a determination is made as to whether there is an entry in the KVM with key = P_H. This check for the entry in KVM results in one of the two following cases: (1) no entry is found in KVM with the key = P_H (also denoted herein as Case 1) or (2) an entry is found in KVM with the key = P_H (also denoted herein as Case 2), which has two associated subcases corresponding to a matching entry being found (denoted herein as Case 2a) or a matching entry not being found (denoted herein as Case 2b). It is noted that, as discussed further below, the packet P is only discarded in Case 2a, whereas in Case 1 and Case 2b the packet P will be forwarded to the receiver.

In the first case in which no entry is found in KVM with the key = P_H (denoted herein as Case 1), then information about the packet is added in the KVM, the CBM, and the RM. Here, let PTR be the current pointer for the CBM. First, in the KVM, an entry is created for key P_H and the following steps are performed for the newly created entry: (a) the "count" field is set to "1" in the value field to indicate that the entry only includes information for one packet (since the entry was just created), (b) within the value field in this entry, the timestamp for the entry is set to the current time, the CBM pointer is set to PTR, and the packet size of the packet P is stored. Second, an entry is also added in RM, where the value in the first slot is set to have access counts as follows: the access count is set = 1 for the access on which packet P arrived and the access counts are set = 0 for all of the other accesses (i.e., the accesses except for the access on which the packet P arrived). Third, letting A be the entry pointed to by PTR in CBM and letting A_H be the current hash value stored in A, then, if A is in KVM (as indicated by the Boolean flag stored in A) then the delete function delete(A_H, PTR) is called on KVM and RM to delete the key-value pair with key = A_H. Finally, in CBM, the contents of A are replaced with information for packet P (i.e., in the CBM entry pointed to by PTR, the portion of the packet P data (e.g., first 64 bytes) is stored, the hash P_H is stored, the flag is set to TRUE).

In the second case in which an entry is found in KVM with the key = P_H (denoted herein as Case 2), there are two potential subcases. This is because, even though the hash matches with P_H, there may not be an entry for packet P in KVM. This can be due to a hash collision between P and the packets stored in KVM. Accordingly, additional checks are performed to ensure that there is indeed an entry for P already present in the KVM. For example, these additional checks may include matching packet sizes and comparing the portion of the packet data kept in the KVM. It is noted that the KVM may hold information for more than one packet (as indicated by the value of the count field) in the value stored for key P_H in the KVM. Accordingly, each of these (up to k) entries is checked, one by one, to determine whether any of the entries correspond to the packet P. For each of these entries to be checked, the first determination that is made is a comparison of the packet size of P with the packet size stored in the entry. If the packet sizes match for some entry, then the PTR value stored in the entry is used as an index to lookup the value stored in the CBM array, from which the stored packet data is retrieved and compared to the corresponding portion of the packet data of P. If the compared packet portions match, then the entry in KVM is considered to be a match for the packet P. If the compared packet portions do not match, then the entry in KVM is not considered to be a match for the packet P and the next entry in the KVM value is selected to be checked. The checking of the entries to determine whether there is a match for packet P results in one of two subcases: (a) a matching entry for packet P is found in the KVM after checking one or more of the entries in the value stored for key P_H in the KVM (denoted as subcase 2a) or (b) a matching entry for packet P is not found in the value stored for key P_H in the KVM after checking each of the entries in the value stored for key P_H in the KVM (denoted as subcase 2b). These subcases are discussed further below.

In the first subcase of the second case, in which an entry is found in KVM with the key = P_H and a matching entry for packet P is found in the KVM after checking one or more of the entries in the value stored for key P_H in the KVM (denoted as subcase 2a), the hash value and the specific packet slot of the matching packet in KVM are used to retrieve the access counts from the RM. The count for the access on which packet P was received is incremented by one and RM is updated with this new access count. This count is then compared with the counts for the other accesses and a determination is made, based on the access counts comparisons, as to whether to forward the packet P to the receiver (based on a determination that the current access count is greater than all of the other access counts) or whether to discard the packet P as being a duplicate packet (based on a determination that the current access count is not greater than all of the other access counts).

In the second subcase of the second case, in which an entry is found in KVM with the key = P_H, but a matching entry for packet P is not found in the value stored for key P_H in the KVM after checking each of the entries in the value stored for key P_H in the KVM (denoted as subcase 2b), the manner in which the packet P is handled depends upon whether there is room in the value field in the KVM (for key P_H) to add information for one more packet or whether all the packet information entries in this value field in the KVM (for key P_H) are occupied. These two possibilities are discussed further below.

If there is room in the value field in the KVM (for key P_H) to add information for packet P, then the information for P is added in the value field in KVM in a manner similar to Case 1 as discussed above with the exception that the count in the KVM value field is incremented by one (rather than being set equal to one) and the information about packet P is stored in the entry corresponding to count -1 in the value field and, additionally, as in Case 1, the RM access counts for the packet P are updated to initialize them to all zeros except that the access count for the access on which the packet P arrived is set equal to one. If all the packet information entries in this value field in the KVM (for key P_H) are occupied such that there is no room in the value field in the KVM (for key P_H) to add information for packet P, then the procedure makes room for packet P in the value field in the KVM and then the steps described above are performed.

If all the packet information entries in this value field in the KVM (for key P_H) are occupied such that there is no room in the value field in the KVM (for key P_H) to add information for packet P then, as indicated above, the procedure makes room for packet P in the value field in the KVM. The room in the value field in the KVM for packet P may be obtained by deleting the oldest packet information entry in the value field. The oldest packet information entry may be identified by comparing the stored timestamps. Let PTR' be the pointer to CBM that is stored in the oldest packet information entry. The delete(A_H, PTR') function (defined below) is called to identify the oldest packet information entry, and then the flag is set to FALSE in the CBM entry pointed to by PTR' to indicate that this entry is now deleted from the KVM.

The delete(A_H, PTR') function, as indicated above, may be called to identify the oldest packet information entry which will be used to make room in the value field in the KVM (for key P_H) to add information for packet. It is noted that this is not a simple delete in the KVM of the key-value pair for key A_H. That is because there may be information for up to k packets in the k entries in the value field of this key-value pair. Each of these entries needs to be checked to find the one which stores information specifically for this packet whose entry is in position PTR in the CBM. This is easily done because the pointer to entry in the CBM is also stored in this packet information slot in KVM. Hence, by comparing this stored pointer with the pointer PTR that is passed as an argument to this function, the specific packet information slot is identified and cleared. After this, a shift is performed whereby all packet information in the entries to the right of the cleared entry is shifted to the left to ensure that there are no gaps between occupied entries. Additionally, the count field is decremented to reflect that there is one less packet information stored in the value field. A similar delete operation is performed on the RM. Having gone through the KVM for this packet, the exact slot in the value field of the RM that needs to be adjusted is known.

It will be appreciated that the design of the packet hash based deduplication capability as discussed above may have properties such as being CPU efficient, memory efficient, resilient to hash collisions, and so forth.

The design of the packet hash based deduplication capability, as discussed above, is CPU efficient. Only a relatively small amount of processing is done per packet. This is because in the design as described above only a constant number of operations are performed for each packet in the worst case.

The design of the packet hash based deduplication capability, as discussed above, is memory efficient. The number of entries in both the KVM and the CBM never goes above a pre-configured fixed bound. Assuming a line rate of 1Gbps, a max delay of 1s between different copies of the packet, and an average packet size of 1000 bytes, then information only needs to be maintained for 1e9/(1000 *8) = 125000 packets. This would require a CBM of size 125K entries and a KVM with no more than 125K key value pairs. Since no more than a total of approximately 100 bytes per entry of KVM and per key value of CBM are kept the amount of memory required is only 125K * 100 bytes (i.e., a few 10s of MBs).

As discussed above, the design of the packet hash based deduplication capability is resilient to hash collisions. The solution only forwards the first packet and discards any subsequent copies. By design, the solution is able to handle at least k (e.g., 3) hash collisions with very high probability (since we also compare packet size and a portion of packet data including the headers).

As discussed above, the design of the packet hash based deduplication capability is also able to handle retransmissions based on per access packet counts. Namely, packet re-transmissions can be handled with an eBPF-based RM that maintains per access count for each packet hash. This scheme guarantees that, if the highest access count is n for a given packet hash, then there have been at least n (re)transmissions so far for this packet (out of which at least n-1 are re-transmissions) and the deduplicator has forwarded this packet exactly n times to the receiver. In addition, this scheme also guarantees that all other copies of this packet and its re-transmissions are dropped by the deduplicator. With this scheme, it is possible to ensure that the deduplicator does not discard re-transmissions and is able to effectively eliminate duplicates including those for re-transmissions.

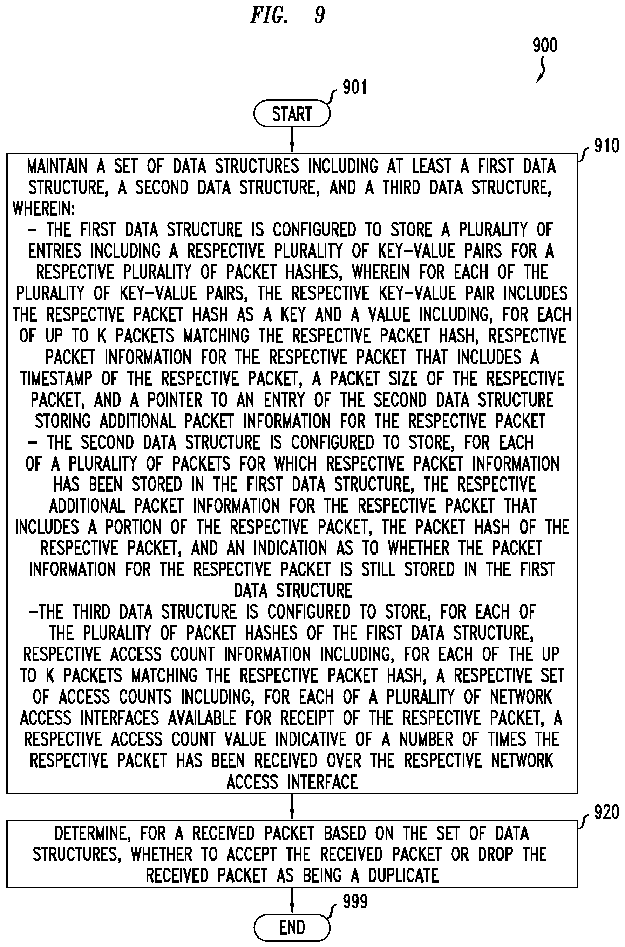

FIG. 9 depicts an example embodiment of a method for supporting hash-based packet deduplication implemented based on an eBPF. It will be appreciated that, although primarily presented as being performed serially, at least a portion of the functions of method 900 may be performed contemporaneously or in a different order than as presented with respect to FIG. 9. At block 901, the method 900 begins. At block 910, maintain a set of data structures including at least a first data structure, a second data structure, and a third data structure. The first data structure is configured to store a plurality of entries including a respective plurality of key-value pairs for a respective plurality of packet hashes, wherein, for each of the plurality of key-value pairs, the respective key-value pair includes the respective packet hash as a key and a value including, for each of up to k packets matching the respective packet hash, respective packet information for the respective packet that includes a timestamp of the respective packet, a packet size of the respective packet, and a pointer to an entry of the second data structure storing additional packet information for the respective packet. The second data structure is configured to store, for each of a plurality of packets for which respective packet information has been stored in the first data structure, the respective additional packet information for the respective packet that includes a portion of the respective packet, the packet hash of the respective packet, and an indication as to whether the packet information for the respective packet is still stored in the first data structure. The third data structure is configured to store, for each of the plurality of packet hashes of the first data structure, respective access count information including, for each of the up to k packets matching the respective packet hash, a respective set of access counts including, for each of a plurality of network access interfaces available for receipt of the respective packet, a respective access count value indicative of a number of times the respective packet has been received over the respective network access interface. At block 920, determine, for a received packet based on the set of data structures, whether to accept the received packet or drop the received packet as being a duplicate. At block 999, the method 900 ends. The method may include features of receive, via one of the network access interfaces, the received packet, compute, based on the received packet, a packet hash of the received packet, and accept the received packet based on a determination that the packet hash of the received packet does not match any of the plurality of packet hashes of the first data structure. The method may include a feature of create, for the received packet in the first data structure, a new entry including a key storing the packet hash of the received packet and a value, wherein the value includes a count field having a value set to one, wherein the value includes a slot for the received packet, wherein the slot for the received packet stores packet information for the received packet, wherein the packet information for the received packet includes a timestamp of the received packet, a packet size of the received packet, and a pointer to a new entry for the received packet in the second data structure. The new entry created for the received packet in the first data structure may be created based on reuse of a least recently used entry of the first data structure. The method may include a feature of create, for the received packet in the second data structure, the new entry for the received packet, wherein the new entry for the received packet includes additional packet information for the received packet, wherein the additional packet information for the received packet includes packet data of the received packet. The second data structure may include a circular buffer supporting a pointer, and the new entry created for the received packet in the second data structure may be created based on reuse of an existing entry of the second data structure currently pointed to by the pointer. The method may include a feature of create, for the received packet in the third data structure, a new entry including access count information indicating, for each of the plurality of network access interfaces, respective numbers of times the received packet has been received over the respective network access interface, wherein the access count information includes a value set equal to one for the one of the network access interfaces via which the received packet was received and any remaining values for any other network access interfaces in the plurality of network access interfaces are set to zero. The method may include features of receive, via one of the network access interfaces, the received packet, compute, based on the received packet, a packet hash of the received packet, and accept the received packet based on: a determination, based on the first data structure, that the packet hash of the received packet matches one of packet hashes of the first data structure and a determination, based on the first data structure and the second data structure, that the received packet does not match any packet having packet information stored in the respective value associated with the respective key having a packet hash matching the packet hash of the received packet. The method may include features of receive, via one of the network access interfaces, the received packet, compute, based on the received packet, a packet hash of the received packet, and accept the received packet based on: a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is a retransmission. The method may include features of receive, via one of the network access interfaces, the received packet, compute, based on the received packet, a packet hash of the received packet, and drop the received packet based on: a determination, based on the first data structure, that the packet hash of the received packet matches one of packet hashes of the first data structure, a determination, based on the first data structure and the second data structure, that the received packet matches a packet having packet information stored in the respective value associated with the respective key having a packet hash matching the packet hash of the received packet, and a determination, based on the third data structure, that the received packet is not a retransmission. The method, in order to determine whether to accept the received packet or drop the received packet as being a duplicate, may include features of receive, via one of the network access interfaces, the received packet, compute, based on the received packet, a packet hash of the received packet, determine, based on a determination that the packet hash of the received packet matches one of packet hashes of the first data structure, whether the received packet matches any packet having packet information stored in the respective value associated with the respective key having a packet hash matching the packet hash of the received packet, and determine, based on whether the received packet matches any packet having packet information stored in the respective value associated with the respective key having the packet hash matching the packet hash of the received packet, whether to accept the received packet or drop the received packet as being a duplicate. The method, in order to determine whether the received packet matches any packet having packet information stored in the respective value associated with the respective key having the packet hash matching the packet hash of the received packet, may include features of determine whether a packet size of the received packet matches any of the packet sizes of any of the up to k packets of the respective value of the key-value pair of the respective key having the packet hash matching the packet hash of the received packet and determine, based on a determination that the packet size of the received packet does not match any of the packet sizes of any of the up to k packets of the respective value of the key-value pair of the respective key having the packet hash matching the packet hash of the received packet, that the received packet does not match any packet having packet information stored in the respective value associated with the respective key having the packet hash matching the packet hash of the received packet. The method, in order to determine whether to accept the received packet or drop the received packet as being a duplicate, may include features of receive, via one of the network access interfaces, the received packet, compute, based on the received packet, a packet hash of the received packet, determine, based on the packet hash of the received packet from the respective access count information associated with the packet hash of the received packet, one of the sets of the access counts corresponding to the received packet, and determine, based on the one of the sets of access counts corresponding to the received packet, whether the received packet is a retransmission or a duplicate packet. The method, in order to determine whether the received packet is a retransmission or a duplicate packet, may include features of increment, within the one of the sets of access counts corresponding to the received packet, the respective access count value associated with the of the network access interfaces over which the packet was received to provide an updated access count value for the one of the network interfaces over which the packet was received, and determine, based on a comparison of the updated access count value with other access count values in the set of access counts corresponding to the received packet, whether the received packet is a retransmission or a duplicate packet. The received packet may be determined to be a retransmission based on a determination that the updated access count value is greater than each of the other access count values in the set of access counts corresponding to the received packet. The received packet may be determined to be a duplicate packet based on a determination that the updated access count value is not greater than each of the other access count values in the set of access counts corresponding to the received packet. The first data structure, the second data structure, and the third data structure may each bounded in size. It will be appreciated that various other functions described herein as supporting hash-based packet deduplication may be implemented within the context of the method 900 of FIG. 9.

It will be appreciated that various example embodiments for packet deduplication based on packet hashes, within the context of supporting of packet replication and deduplication, may be configured to support various other functions for supporting packet deduplication based on packet hashes.

Various example embodiments for supporting packet replication and deduplication may be configured to support packet deduplication based on packet sequence numbers. It will be appreciated that, although primarily presented within the context of supporting deduplication for TCP flows based on use of TCP sequence numbers, various example embodiments for supporting deduplication based on packet sequence numbers may be configured to support packet deduplication for various other protocols which utilize sequence numbers for reliable packet delivery.

As mentioned above, per-packet deduplication may not work properly for TCP traffic when TCP offloads are enabled. Performing proper deduplication in this case requires computing hash values at the byte-level, not at the packet-level, and stripping off any duplicate bytes from TCP payloads. This would require significant computation overhead for deduplication and may not be efficient, or even feasible, for line-rate traffic if deduplication is performed on a resource-constrained device. Instead, an alternative lightweight approach is a byte-stream-oriented solution. This approach is based on a recognition of the fact that TCP is a byte-streaming protocol where each payload byte is uniquely identified, in a given time window, by a TCP sequence number (TSN). Therefore, all that is required for deduplication is to drop packets with duplicate TSN ranges. Essentially, byte-level hashes are substituted with byte-level TSNs which are readily available in the TCP header without any additional computation by the deduplicator.

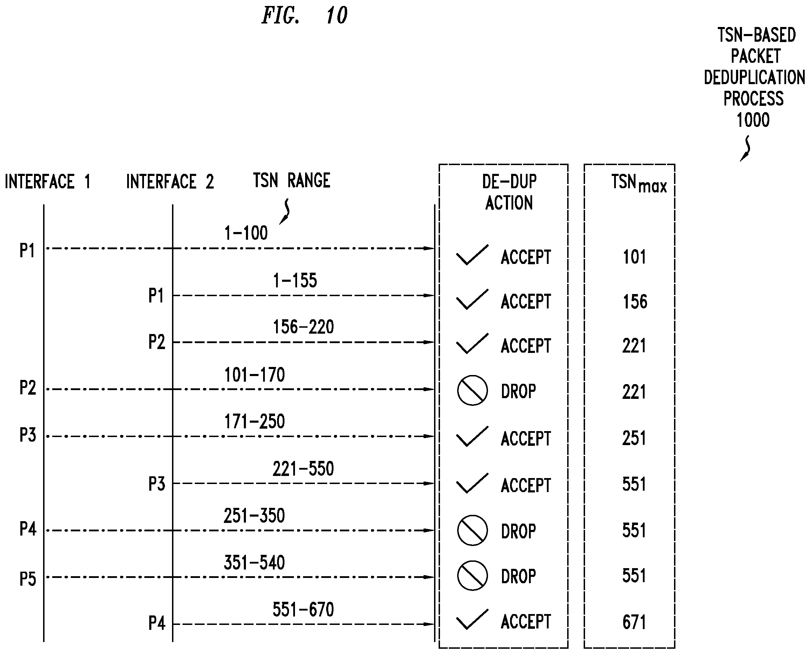

In at least some example embodiments, based on the observation discussed above, TSN-based deduplication can be designed as follows. The deduplicator maintains per-flow state which keeps track of the next TSN to receive for a given flow f (noted as TSNₘₐₓ(*f*)). This means that the deduplicator has received TSNs up until TSNₘₐₓ(*f*) - 1. When the deduplicator receives a packet for flow f, it accepts the packet only if it advances TSNₘₐₓ(*f*). If the TSN range of a packet is below TSNₘₐₓ(*f*), it probably means that the packet is part of the byte stream which was already received before and, hence, the packet is dropped by the deduplicator. An example is presented with respect to FIG. 10. As depicted in the TSN-based packet deduplication process 1000 of FIG. 10, the deduplicator receives packets for a specific TCP flow from two interfaces (denoted as Interface 1 and Interface 2) and performs deduplication (denoted as Dedup Action) while updating TSNₘₐₓ(*f*) for the TCP flow. TCP offloads are enabled and, hence, the deduplicator receives packet streams with different packet sizes from the two interfaces. The first two packets from interface 2 are accepted because they advance TSNₘₐₓ(*f*) from 101 to 156, and from 156 to 221, respectively. After this point, the second packet from interface 1 is dropped by the deduplicator since its TSN range (101-170) is below TSNₘₐₓ(*f*) of 221. The fourth and fifth packets from interface 1 are dropped for similar reasons. While this form of TSN-based deduplication works most of the time, there are cases where this approach can introduce performance degradation for underlying TCP flows (e.g., when packet reordering is performed, as described below).

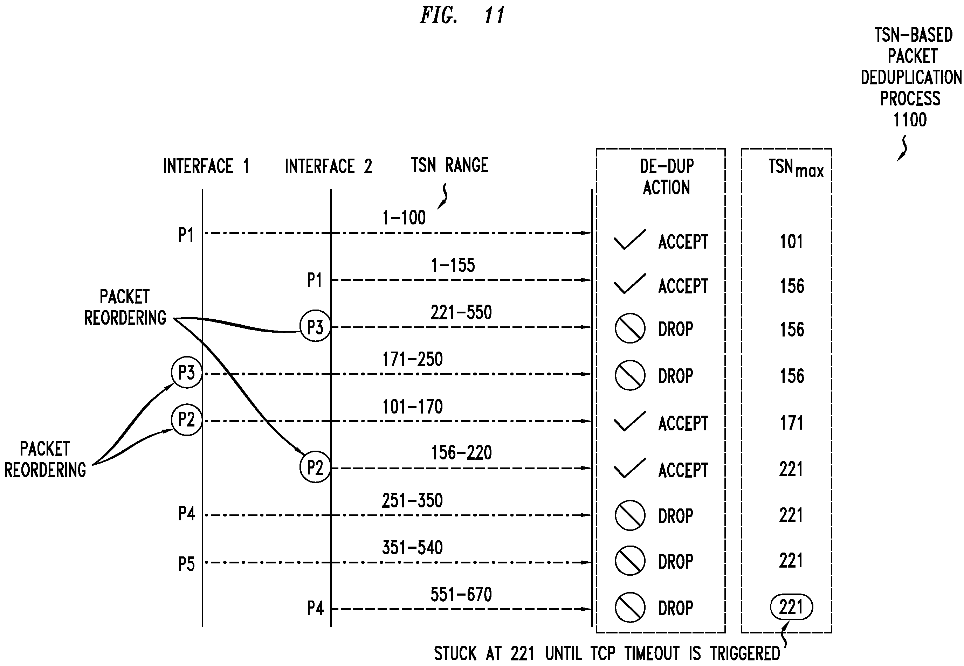

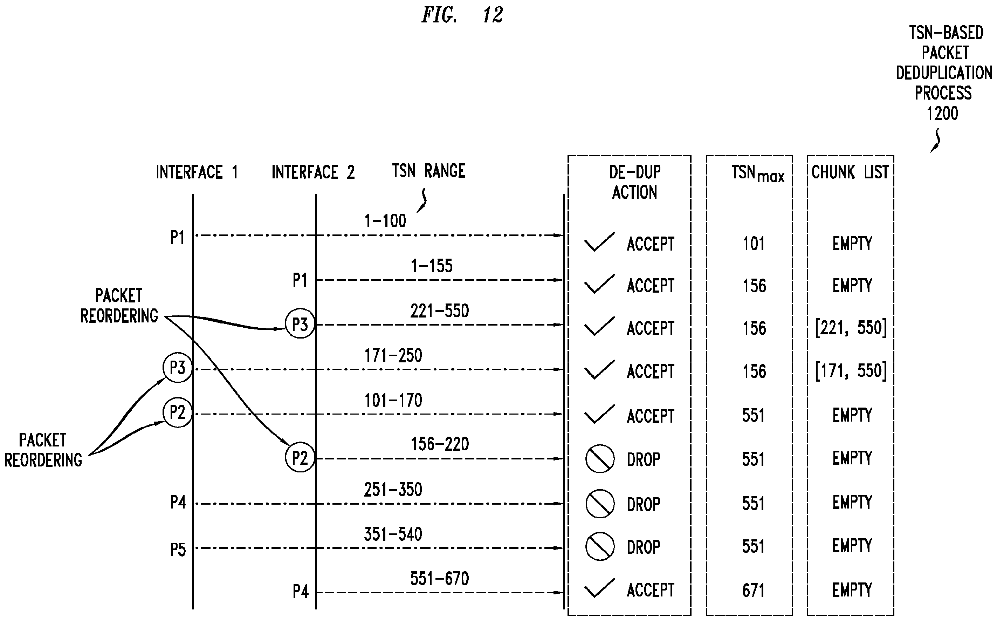

As indicated above, the design above is based on an assumption that the deduplicator accepts an incoming packet only if its TSN range advances TSNₘₐₓ(*f*) without "any gap" in received TSNs. By doing so, it can easily tell if the packet is duplicate or not simply by comparing the TSN range of the packet with TSNₘₐₓ(*f*). However, the downside of the approach is that the deduplicator can drop packets more aggressively than necessary, leading to an undesirable TCP behavior. Specifically, the deduplicator will end up dropping a packet if its TSN range is greater than TSNₘₐₓ(*f*) (i.e., the packet is a new packet not seen before, but there is a gap between already received TSNs and the TSN of that packet). This drop behavior can cause unnecessary TCP timeout. For example, in the original scenario shown in FIG. 10, assume that there are two packet reordering events: P2 and P3 from interface 1 are reordered, and P2 and P3 from interface 2 reordered. This updated scenario is shown in FIG. 11. As depicted in the TSN-based packet deduplication process 1100 of FIG. 11, with packet reordering, the second packet from interface 2 is dropped by the deduplicator because its TSN range [221-550] is greater than TSNₘₐₓ(*f*) at the time (156). The second packet from interface 1 [171-250] is dropped for the same reason. TSNₘₐₓ(*f*) remains 156 during these packet events. As shown in FIG. 11, TSNₘₐₓ(*f*) advances until 221, after which no new packets from either interface will be accepted by the deduplicator because they cannot fill the gap at TSN 221 onward. Eventually, a TCP timeout will be triggered, and the deduplicator will receive packets starting from TSN 221 onward. Essentially, the strict "no-gap" advancement of TSNₘₐₓ(*f*) by the deduplicator makes the resulting TCP vulnerable to packet re-ordering events and, thus, can cause unnecessary TCP timeout. An example embodiment of TSN-based deduplication designed to avoid such timeouts is presented below with respect to FIG. 12.

In at least some example embodiments, TSN-based deduplication can be designed as follows in order to avoid the problem of TCP timeouts discussed above. Here, TSN-based deduplication can be extended to accept new packets whose TSN range is greater than TSNₘₐₓ(*f*) (i.e., allowing gaps in received TSNs). To accept new such packets with non-contiguous TSN ranges, the deduplicator is modified to maintain extended per-flow state which includes not just TSNₘₐₓ(*f*), but also a list of TCP chunks. A "chunk" is a contiguous TSN range defined by (TSNₛₜₐᵣₜ, TSN_{end}). Different chunks in the list have nonoverlapping TSN ranges. The chunk list can grow up to N chunks. Whenever the deduplicator receives a new packet whose TSN range is greater than TSNₘₐₓ(*f*), the packet is added to the chunk list. The packet is added as a new chunk in the list if there is no chunk with overlapping TSN ranges. Alternatively, the packet can be merged into an existing chunk if the TSN range of the chunk and the TSN range of the packet are partially overlapping. In this case, it is also possible that, after merging, the updated chunk may be (i) combined with another chunk in the list if the respective TSN ranges of the two chunks are partially overlapping or (ii) be removed from the chunk list if there is no gap between its updated TSN range and TSNₘₐₓ(*f*). An example is presented with respect to FIG. 12, which illustrates the manner in which the extended deduplication can handle the reordered packets illustrated in FIG. 11 without triggering a TCP timeout. As depicted in the TSN-based packet deduplication process 1200 of FIG. 12, with packet reordering, when the deduplicator receives the second packet [221-550] from interface 2, since the TSN range of the packet is greater than TSNₘₐₓ(*f*), the deduplicator accepts the packet and adds the packet as a new chunk [221,550] in the chunk list. Next, when the deduplicator receives the second packet [171-250] from interface 1, again, it adds the packet to the chunk list for the same reason. This time, however, the TSN range of the packet is overlapping with the existing chunk [221,550]. So, the packet is merged into that chunk, making it [171,550]. When the third packet [101-170] from interface 1 arrives, the deduplicator finally advances TSNₘₐₓ(*f*) to 171, which in turns triggers the existing chunk [171,550] to be removed from the chunk list since there is no longer any gap between the updated TSNₘₐₓ(*f*) (171) and the chunk [171,550]. After chunk removal, the final TSNₘₐₓ(*f*) is advanced to 551. Subsequently arriving packets are handled properly, and TSNₘₐₓ(*f*) continues to advance without any unnecessary TCP timeout.

The deduplicator may be configured to distinguish between duplicate packets and retransmitted packets where the TCP packet retransmission is caused by packet losses that occur "after" deduplication. When a packet is accepted by deduplication, the packet can still be lost before being consumed by its target TCP application. For example, the packet may be lost while traveling from the deduplication device to a client device where a target TCP application is running. Even if the application runs on the same device where deduplication occurs, the TCP buffer for the application may temporarily overflow, causing the packet to be dropped before consumption. If packet loss happens after deduplication for any of these reasons, it will trigger retransmission by the client-side TCP. However, when the sender re-sends the requested packet, the retransmitted packet will be dropped by the deduplicator as the packet was already seen before (i.e., its TSN range ≤ TSNₘₐₓ(*f*)). Accordingly, in order to support valid TCP retransmission (i.e., accept retransmitted packets), the deduplicator may be configured to distinguish between duplicate packets and legitimately retransmitted packets. To solve this problem, the deduplicator may be configured to exploit the fact that, in order for a packet to be retransmitted, it takes at least one round-trip time (RTT) between a sender and a receiver. So, if the deduplicator receives an old packet whose TSN range was seen at least RTT before, it probably means that the packet is retransmitted by the sender. Here, since there are multiple network accesses with different RTTs between a sender and a receiver, the RTT that is used is the maximum RTT across all available network accesses. Based on this observation, the deduplicator is extended to maintain TSN_{head}(*f*) for each flow *f.* TSN_{head}(*f*) is the approximate TSN that was received for flow *f* at [current time - RTTₘₐₓ]. When the deduplicator receives an old packet with TSN range (TSN₁, TSN₂), where TSN₂ ≤ TSNₘₐₓ(*f*), it compares TSN₁ with TSN_{head}(*f*). If TSN₁ < TSN_{head}(*f*), then the deduplicator considers the packet as a retransmitted packet and accepts it; otherwise, the deduplicator considers the packet to be a duplicate and the packet is dropped. To continuously update TSN_{head}(*f*), the deduplicator maintains the following across all network accesses: (i) per-flow byte rate (noted as BR(*f*)), where BR(*f*) is the average number of payload bytes received per second for each flow *f,* and (ii) maximum RTT information (RTTₘₐₓ), which is the global state across all flows. The deduplicator can compute BR(*f*) with minimal overhead by maintaining a sliding window of fixed size M, which contains the number of bytes and corresponding timestamp for each of the most recent M packets received. The deduplicator can obtain RTTₘₐₓ by consulting an external entity that performs RTT measurements for existing network accesses. Given BR(*f*) and RTTₘₐₓ, TSN_{head}(*f*) is computed as TSNₘₐₓ(*f*) - BR(*f*) * RTTₘₐₓ. This enables the deduplicator to distinguish between duplicate packets and retransmitted packets where the TCP packet retransmission is caused by packet losses that occur "after" deduplication. It will be appreciated that, although primarily presented with respect to use of the maximum RTT to determine whether packets are duplicates or retransmissions, other types of RTT values may be used (e.g., average RTT of the network accesses, median RTT of the network accesses, or the like).

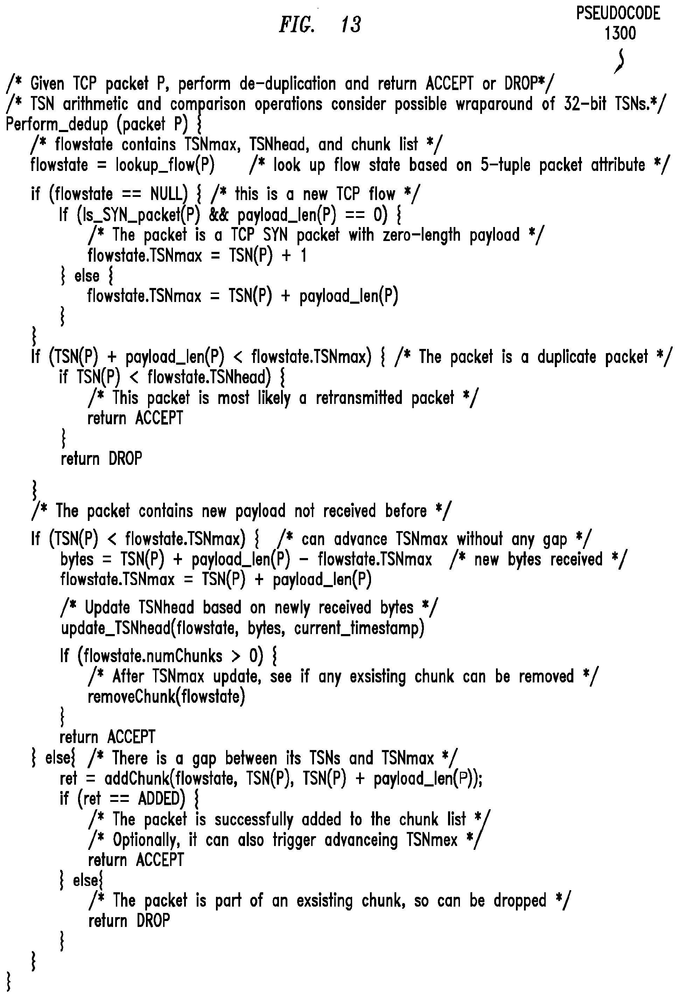

FIG. 13 depicts an example embodiment of pseudocode configured to support TSN-based packet deduplication in the presence of packet reordering and re-transmissions. As depicted in FIG, 13, pseudocode 1300 is configured to enable a deduplicator to support TSN-based packet deduplication, in the presence of packet reordering and re-transmissions, based on tracking of various types of information. More specifically, pseudocode 1300 is configured to enable a deduplicator to support TSN-based packet deduplication, in the presence of packet reordering and re-transmissions, based on tracking of a maximum TSN value, chunk list information (which allows a deduplicator to avoid unnecessary TCP timeouts when packets are arriving out-of-order), and a head TSN value (which provides an estimate, based on RTT information, of the TSN value that may be used to distinguish between duplicate packets and retransmitted packets).

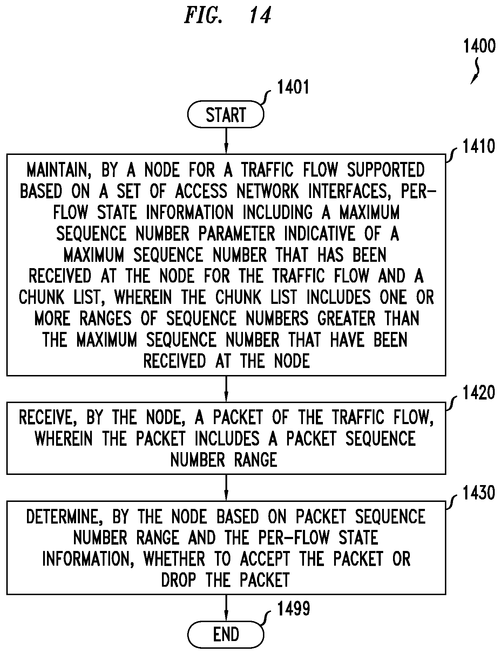

FIG. 14 depicts an example embodiment of a method for supporting sequence number based packet deduplication. It will be appreciated that, although primarily presented as being performed serially, at least a portion of the functions of method 1400 may be performed contemporaneously or in a different order than as presented with respect to FIG. 14. At block 1401, the method 1400 begins. At block 1410, maintain, by a node for a traffic flow supported based on a set of access network interfaces, per-flow state information including a maximum sequence number parameter indicative of a maximum sequence number that has been received at the node for the traffic flow and a chunk list, wherein the chunk list includes one or more chunks representing, respectively, one or more ranges of sequence numbers greater than the maximum sequence number that have been received at the node. At block 1420, receive, by the node, a packet of the traffic flow, wherein the packet includes a packet sequence number range. At block 1430, determine, by the node based on packet sequence number range and the per-flow state information, whether to accept the packet or drop the packet. At block 1499, the method 1400 ends. The method may include the feature of accept the packet based on a determination that the packet sequence number range of the packet advances the maximum sequence number of the maximum sequence number parameter without any gaps in sequence numbers of the traffic flow received at the node. The method may include the feature of update the maximum sequence number parameter based on a maximum sequence number in the packet sequence number range. The method may include the feature of accept the packet based on a determination that a minimum sequence number in the packet sequence number range is greater than the maximum sequence number of the maximum sequence number parameter and the packet sequence number range is not full contained within an existing chunk of the chunk list. The method may include the feature of update the chunk list based on the packet sequence number range. The update of the chunk list based on the packet sequence number range may include a feature of update, based on a determination that the packet sequence number range of the packet does not overlap the range of sequence numbers of any chunk in the chunk list, a new chunk to the chunk list based on the packet, wherein the new chunk has a range of sequence numbers matching the packet sequence number range. The update of the chunk list may include a feature of update, based on a determination that the packet sequence number range of the packet partially overlaps the range of sequence numbers of an existing chunk in the chunk list, the range of sequence numbers of the existing chunk based on the packet to provide an updated range of sequence numbers of the existing chunk. The update of the range of sequence numbers of the existing chunk based on the packet to provide the updated range of sequence numbers of the existing chunk may include a feature of change a starting sequence number of the range of sequence numbers of the existing chunk to a minimum sequence number of the packet sequence number range or a feature of change an ending sequence number of the range of sequence numbers of the existing chunk to a maximum sequence number of the packet sequence number range. The method may include a feature of merge the existing chunk with a second existing chunk of the chunk list based on a determination that the updated range of sequence numbers of the existing chunk and the range of sequence numbers of the second existing chunk partially overlap or remove the existing chunk from the chunk list based on a determination that there is no gap between the updated range of sequence numbers of the existing chunk and the maximum sequence number of the maximum sequence number parameter. The method may include a feature of drop the packet based on at least one of a determination that the packet sequence number range of the packet is less than or equal to the maximum sequence number of the maximum sequence number parameter or a determination that the packet sequence number range of the packet is greater than the maximum sequence number of the maximum sequence number parameter and the packet sequence number range of the packet fully overlaps an existing chunk of the chunk list. The method may include features of maintain, by the node as part of the per-flow state information, a sequence number head value indicative of a sequence number received for the traffic flow at a time computed as a difference between a current time and a selected round trip time of a set of round trip times for the respective set of access network interfaces, receive, by the node, a second packet of the traffic flow, wherein the second packet includes a second packet sequence number range, and determine, by the node based on the sequence number head value and the second packet sequence number range, whether to accept the second packet as being a retransmission or drop the second packet as being a duplicate. The determination as to whether to accept the second packet as being a retransmission or drop the second packet as being a duplicate may include features of compare, based on a determination that a maximum sequence number of the second packet sequence number range is less than or equal to a value of the maximum sequence number parameter when the second packet is received, a minimum sequence number of the second packet sequence number range with the sequence number head value and determine, based on comparison of the minimum sequence number of the second packet sequence number range with the sequence number head value, whether to accept the second packet as being a retransmission or drop the second packet as being a duplicate. The method may include a feature of accept the second packet as being a retransmission based on a determination that the minimum sequence number of the second packet sequence number range is less than the sequence number head value. The method may include a feature of drop the second packet as being a duplicate based on a determination that the minimum sequence number of the second packet sequence number range is equal to or greater than the sequence number head value. The method may include features of maintain, for the traffic flow, a per-flow byte rate of the traffic flow and round trip time information for the access network interfaces and compute the sequence number head value based on the per-flow byte rate of the traffic flow and the round trip time information for the access network interfaces. It will be appreciated that various other functions described herein as supporting hash-based packet deduplication may be implemented within the context of the method 1400 of FIG. 14.

It will be appreciated that various example embodiments for packet deduplication based on packet sequence numbers, within the context of supporting of packet replication and deduplication, may be configured to support various other functions for supporting packet deduplication based on packet sequence numbers.

Various example embodiments for supporting packet replication and deduplication may provide various advantages or potential advantages. For example, various example embodiments for supporting packet replication and deduplication may be configured to support replication and deduplication of packets in a manner for providing increased reliability and reduced latency for various applications while also enabling improved resource utilization and network performance. For example, various example embodiments for supporting packet replication and deduplication may be configured to support replication and deduplication of packets in kernel space, thereby minimizing overhead and supporting operation at full line rate while supporting efficient processing of packets and minimizing the impact on system resources. For example, various example embodiments for supporting packet replication and deduplication may be configured to support replication and deduplication of packets based on use of OVS and eBPF, thereby enabling efficient and resource-light replication and deduplication of packets while also improving resource utilization and network performance. It will be appreciated that various example embodiments for supporting packet replication and deduplication may provide various other advantages or potential advantages.

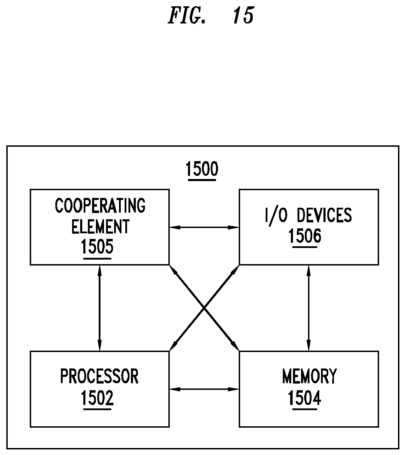

FIG. 15 depicts an example embodiment of a computer suitable for use in performing various functions presented herein.

The computer 1500 includes a processor 1502 (e.g., a central processing unit (CPU), a graphics processing unit (GPU), a network processing unit (NPU), a processor, a processor having a set of processor cores, a processor core of a processor, or the like) and a memory 1504 (e.g., a random access memory (RAM), a read-only memory (ROM), or the like). In at least some example embodiments, the computer 1500 may include at least one processor and at least one memory storing instructions which, when executed by the at least one processor, cause the computer 1500 to perform various functions presented herein.

The computer 1500 also may include a cooperating element 1505. The cooperating element 1505 may be a hardware device. The cooperating element 1505 may be a process that can be loaded into the memory 1504 and executed by the processor 1502 to implement various functions presented herein (in which case, for example, the cooperating element 1505 (including associated data structures) can be stored on a non-transitory computer readable medium, such as a storage device or other suitable type of storage element (e.g., a magnetic drive, an optical drive, or the like)).

The computer 1500 also may include one or more input/output devices 1506. The input/output devices 1506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1500 may represent a general architecture and functionality suitable for implementing functional elements described herein, portions of functional elements described herein, or the like, as well as various combinations thereof. For example, the computer 1500 may provide a general architecture and functionality that is suitable for implementing one or more elements presented herein. For example, the computer 1500 may provide a general architecture and functionality that is suitable for implementing at least one of a a sender, a sender side device, a receiver, a receiver side device, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
means to maintain a set of data structures including at least a first data structure, a second data structure, and a third data structure, wherein:
the first data structure is configured to store a plurality of entries including a respective plurality of key-value pairs for a respective plurality of packet hashes, wherein, for each of the plurality of key-value pairs, the respective key-value pair includes the respective packet hash as a key and a value including, for each of up to k packets matching the respective packet hash, respective packet information for the respective packet that includes a timestamp of the respective packet, a packet size of the respective packet, and a pointer to an entry of the second data structure storing additional packet information for the respective packet;
the second data structure is configured to store, for each of a plurality of packets for which respective packet information has been stored in the first data structure, the respective additional packet information for the respective packet that includes a portion of the respective packet, the packet hash of the respective packet, and an indication as to whether the packet information for the respective packet is still stored in the first data structure; and
the third data structure is configured to store, for each of the plurality of packet hashes of the first data structure, respective access count information including, for each of the up to k packets matching the respective packet hash, a respective set of access counts including, for each of a plurality of network access interfaces available for receipt of the respective packet, a respective access count value indicative of a number of times the respective packet has been received over the respective network access interface; and
means to determine, for a received packet based on the set of data structures, whether to accept the received packet or drop the received packet as being a duplicate.

2. The apparatus of claim 1, comprising:
means to receive, via one of the network access interfaces, the received packet;
means to compute, based on the received packet, a packet hash of the received packet; and
means to accept the received packet based on a determination that the packet hash of the received packet does not match any of the plurality of packet hashes of the first data structure.

3. The apparatus of claim 2, comprising:
means to create, for the received packet in the first data structure, a new entry including a key storing the packet hash of the received packet and a value, wherein the value includes a count field having a value set to one, wherein the value includes a slot for the received packet, wherein the slot for the received packet stores packet information for the received packet, wherein the packet information for the received packet includes a timestamp of the received packet, a packet size of the received packet, and a pointer to a new entry for the received packet in the second data structure.

4. The apparatus of claim 3, wherein the new entry created for the received packet in the first data structure is created based on reuse of a least recently used entry of the first data structure.

5. The apparatus of any one of claims 2 to 4, comprising:
means to create, for the received packet in the second data structure, the new entry for the received packet, wherein the new entry for the received packet includes additional packet information for the received packet, wherein the additional packet information for the received packet includes packet data of the received packet.

6. The apparatus of claim 5, wherein the second data structure comprises a circular buffer supporting a pointer, wherein the new entry created for the received packet in the second data structure is created based on reuse of an existing entry of the second data structure currently pointed to by the pointer.

7. The apparatus of any one of claims 2 to 6, comprising:
means to create, for the received packet in the third data structure, a new entry including access count information indicating, for each of the plurality of network access interfaces, respective numbers of times the received packet has been received over the respective network access interface, wherein the access count information includes a value set equal to one for the one of the network access interfaces via which the received packet was received and any remaining values for any other network access interfaces in the plurality of network access interfaces are set to zero.

8. The apparatus of any one of claims 1 to 7, comprising:
means to receive, via one of the network access interfaces, the received packet;
means to compute, based on the received packet, a packet hash of the received packet; and
means to accept the received packet based on:
a determination, based on the first data structure, that the packet hash of the received packet matches one of packet hashes of the first data structure; and
a determination, based on the first data structure and the second data structure, that the received packet does not match any packet having packet information stored in the respective value associated with the respective key having a packet hash matching the packet hash of the received packet.

9. The apparatus of any one of claims 1 to 8, comprising:
means to receive, via one of the network access interfaces, the received packet;
means to compute, based on the received packet, a packet hash of the received packet; and
means to accept the received packet based on:
a determination, based on the first data structure, that the packet hash of the received packet matches one of packet hashes of the first data structure;
a determination, based on the first data structure and the second data structure, that the received packet matches a packet having packet information stored in the respective value associated with the respective key having a packet hash matching the packet hash of the received packet; and
a determination, based on the third data structure, that the received packet is a retransmission.

10. The apparatus of any one of claims 1 to 9, comprising:
means to receive, via one of the network access interfaces, the received packet;
means to compute, based on the received packet, a packet hash of the received packet; and
means to drop the received packet based on:
a determination, based on the first data structure, that the packet hash of the received packet matches one of packet hashes of the first data structure;
a determination, based on the first data structure and the second data structure, that the received packet matches a packet having packet information stored in the respective value associated with the respective key having a packet hash matching the packet hash of the received packet; and
a determination, based on the third data structure, that the received packet is not a retransmission.

11. The apparatus of any one of claims 1 to 10, wherein, to determine whether to accept the received packet or drop the received packet as being a duplicate, the apparatus comprises:
means to receive, via one of the network access interfaces, the received packet;
means to compute, based on the received packet, a packet hash of the received packet;
means to determine, based on a determination that the packet hash of the received packet matches one of packet hashes of the first data structure, whether the received packet matches any packet having packet information stored in the respective value associated with the respective key having a packet hash matching the packet hash of the received packet; and
means to determine, based on whether the received packet matches any packet having packet information stored in the respective value associated with the respective key having the packet hash matching the packet hash of the received packet, whether to accept the received packet or drop the received packet as being a duplicate.

12. The apparatus of claim 11, wherein, to determine whether the received packet matches any packet having packet information stored in the respective value associated with the respective key having the packet hash matching the packet hash of the received packet, the apparatus comprises:
means to determine whether a packet size of the received packet matches any of the packet sizes of any of the up to k packets of the respective value of the key-value pair of the respective key having the packet hash matching the packet hash of the received packet; and
means to determine, based on a determination that the packet size of the received packet does not match any of the packet sizes of any of the up to k packets of the respective value of the key-value pair of the respective key having the packet hash matching the packet hash of the received packet, that the received packet does not match any packet having packet information stored in the respective value associated with the respective key having the packet hash matching the packet hash of the received packet.

13. The apparatus of any one of claims 1 to 12, wherein, to determine whether to accept the received packet or drop the received packet as being a duplicate, the apparatus comprises:
means to receive, via one of the network access interfaces, the received packet;
means to compute, based on the received packet, a packet hash of the received packet;
means to determine, based on the packet hash of the received packet from the respective access count information associated with the packet hash of the received packet, one of the sets of the access counts corresponding to the received packet; and
means to determine, based on the one of the sets of access counts corresponding to the received packet, whether the received packet is a retransmission or a duplicate packet.

14. The apparatus of claim 13, wherein, to determine whether the received packet is a retransmission or a duplicate packet, the apparatus comprises:
means to increment, within the one of the sets of access counts corresponding to the received packet, the respective access count value associated with the of the network access interfaces over which the packet was received to provide an updated access count value for the one of the network interfaces over which the packet was received; and
means to determine, based on a comparison of the updated access count value with other access count values in the set of access counts corresponding to the received packet, whether the received packet is a retransmission or a duplicate packet.

15. The apparatus of claim 14, wherein the received packet is determined to be a retransmission based on a determination that the updated access count value is greater than each of the other access count values in the set of access counts corresponding to the received packet.
